# EUROPEAN PATENT APPLICATION

(11) **EP 4 518 307 A1**
(43) Date of publication of application: **05.03.2025**
(21) Application number: 24196409.7
(22) Date of filing: 26.08.2024
(51) Int. Cl.: H04N 1/60

(54) **COLOR MANAGEMENT APPARATUS, COLOR MANAGEMENT SYSTEM, AND COLOR MANAGEMENT PROGRAM**

(30) Priority: 30.08.2023 JP 2023139542
(71) Applicant: KONICA MINOLTA, INC., Tokyo 100-7015 (JP)
(72) Inventor: KANAGAWA, Kouhei, Tokyo, 100-7015 (JP); MATSUSHITA, Kouichirou, Tokyo, 100-7015 (JP)
(74) Representative: Hoffmann Eitle

(57) **Abstract**

To enable even a printing operator who lacks knowledge about colors to easily manage colors to be used by a printing apparatus. A color management apparatus 30 includes a first mode executor 311 and a second mode executor 312. The first mode executor 311 executes a first mode to perform color management setting including setting of a plurality of items regarding a color management function of a printing apparatus 20 through a plurality of steps, and perform the color management function, and the second mode executor 312 executes a second mode to simplify at least one step among the plurality of steps to perform the color management setting, and perform the color management function.

## Description

### CROSS-REFERENCE TO RELATED APPLICATIONS

The entire disclosure of Japanese patent Application No. 2023-139542, filed on August 30, 2023, is incorporated herein by reference in its entirety.

### Background of the Invention

### 1. Technical Field

The present invention relates to a color management apparatus, a color management system, and a color management program.

### 2. Description of Related art

In commercial printing in which a large amount of printing work is performed, in order to secure the quality regarding a color of a printed product, a color administrator sets a color management condition, and calibration between a colorimetric value of a color patch printed as a color sample and the color management condition is performed. As such a technology, for example, Patent Literature 1 is disclosed.

In Patent Literature 1, a "color management condition for management of the accuracy of colors in a printing apparatus is set, and a colorimetric value of a color patch printed as a color sample by the printing apparatus is acquired in association with a time point of printing of the color patch. A recommended execution cycle of the calibration for the printing apparatus is determined based on a plurality of colorimetric values acquired at a plurality of printing time points and the set color management condition."

### [Citation List]

### [Patent Literature]

Patent Literature 1: Japanese Unexamined Patent Application Publication No. 2012-217054

### Summary of the Invention

As described above, conventionally, the color administrator manages colors by setting a color management condition of the printing apparatus. However, routine color management in printing operations is usually performed by a printing operator. In a case where the printing operator is a part-timer, a part-time employee, or the like, there is a possibility that the knowledge of the printing operator about colors is insufficient. Therefore, as in the technique described in Patent Literature 1, with only one operation mode, the printing operator's work time becomes long, and the number of mistakes increases. For this reason, it is necessary to simplify the setting and operation procedure of daily color management.

The present invention has been made in consideration of the above-described situation, and an object of the present invention is to enable even a printing operator who lacks knowledge about colors to easily manage colors for a printing apparatus.

A color management apparatus according to the present invention includes a first mode executor and a second mode executor, in which the first mode executor executes a first mode to perform color management setting including setting of a plurality of items regarding a color management function of a printing apparatus through a plurality of steps, and perform the color management function, and the second mode executor executes a second mode to simplify at least one step among the plurality of steps to perform the color management setting, and perform the color management function.

According to the present invention including the aforementioned configuration, even a printing operator who lacks knowledge about colors can easily manage colors for a printing apparatus.

Problems, configurations, and effects other than those described above will be made clear by the description of the following embodiments.

### Brief Description of the Drawings

The advantages and features provided by one or more embodiments of the invention will become more fully understand from the detailed description given hereinbelow and the appended drawings which are given by way of illustration only, and thus are not intended as a definition of the limits of the present invention.
Fig. 1 is a diagram illustrating schematic configurations of a color management system and a color management apparatus according to an embodiment of the present invention;
Fig. 2 is a block diagram illustrating an example of a hardware configuration of the color management apparatus according to the embodiment of the present invention;
Fig. 3 is a diagram illustrating an example of a configuration of a color verification setting screen in a first mode of the color management system according to the embodiment of the present invention;
Fig. 4 is a diagram illustrating an example of a configuration of a color verification setting screen in the first mode of the color management system according to the embodiment of the present invention;
Fig. 5 is a diagram illustrating an example of a configuration of a color verification setting screen in the first mode of the color management system according to the embodiment of the present invention;
Fig. 6 is a diagram illustrating an example of a configuration of a color verification setting screen in the first mode of the color management system according to the embodiment of the present invention;
Fig. 7 is a diagram illustrating an example of a configuration of a color verification setting screen in the first mode of the color management system according to the embodiment of the present invention;
Fig. 8 is a diagram illustrating an example of a configuration of a color verification setting screen in the first mode of the color management system according to the embodiment of the present invention;
Fig. 9 is a diagram illustrating an example of a configuration of a color verification setting screen in a second mode of the color management system according to the embodiment of the present invention;
Fig. 10 is a diagram illustrating an example of a configuration of a color verification setting screen in the second mode of the color management system according to the embodiment of the present invention;
Fig. 11 is a diagram illustrating an example of a configuration of a color verification setting screen in the second mode of the color management system according to the embodiment of the present invention;
Fig. 12 is a diagram illustrating an example of a configuration of a color verification setting screen in the second mode of the color management system according to the embodiment of the present invention;
Fig. 13 is a diagram illustrating an example of a configuration of a profile creation screen in the first mode of the color management system according to the embodiment of the present invention;
Fig. 14 is a diagram illustrating an example of a configuration of a profile creation screen in the first mode of the color management system according to the embodiment of the present invention;
Fig. 15 is a diagram illustrating an example of a configuration of a profile creation screen in the first mode of the color management system according to the embodiment of the present invention;
Fig. 16 is a diagram illustrating an example of a configuration of a profile creation screen in the first mode of the color management system according to the embodiment of the present invention;
Fig. 17 is a diagram illustrating an example of a configuration of a profile creation screen in the first mode of the color management system according to the embodiment of the present invention;
Fig. 18 is a diagram illustrating an example of a configuration of a profile creation screen in the first mode of the color management system according to the embodiment of the present invention;
Fig. 19 is a diagram illustrating an example of a configuration of a profile creation screen in the second mode of the color management system according to the embodiment of the present invention;
Fig. 20 is a diagram illustrating an example of a configuration of a profile creation screen in the second mode of the color management system according to the embodiment of the present invention;
Fig. 21 is a diagram illustrating an example of a configuration of a profile creation screen in the second mode of the color management system according to the embodiment of the present invention;
Fig. 22 is a diagram illustrating an example of a configuration of a profile creation screen in the second mode of the color management system according to the embodiment of the present invention;
Fig. 23 is a diagram illustrating an example of a configuration of a screen for color management setting in the color management system according to the embodiment of the present invention;
Fig. 24 is a diagram illustrating an example of a configuration of each of management screens for various settings in the color management system according to the embodiment of the present invention;
Fig. 25 is a diagram illustrating various setting items of color management setting in the color management system according to the embodiment of the present invention;
Fig. 26 is a diagram illustrating various setting items for profile creation and color verification in the color management system according to the embodiment of the present invention;
Fig. 27 is a diagram illustrating various setting items of a printer in the color management system according to the embodiment of the present invention;
Fig. 28 is a diagram illustrating various setting items of a custom target profile and a custom RGB file in the color management system according to the embodiment of the present invention;
Fig. 29 is a flowchart illustrating a procedure of a process of adding a color management setting in the first mode in the color management system according to the embodiment of the present invention;
Fig. 30 is a flowchart illustrating a procedure of a function execution process in the first mode in the color management system according to the embodiment of the present invention;
Fig. 31 is a flowchart illustrating the procedure of a function execution process in the second mode in the color management system according to the embodiment of the present invention;
Fig. 32 is a flowchart illustrating a procedure of a function restriction process for the second mode in the color management system according to the embodiment of the present invention;
Figs. 33A and 33B are diagrams illustrating an example of printer restriction data for the second mode in the color management system according to the embodiment of the present invention;
Figs. 34A and 34B are diagrams illustrating an example of function restriction data for the second mode in the color management system according to the embodiment of the present invention; and
Fig. 35 is a diagram illustrating an example of color management setting restriction data for the second mode in the color management system according to the embodiment of the present invention.

### Detailed Description

Hereinafter, an embodiment for implementing the present invention will be described with reference to the accompanying drawings.

However, the scope of the invention is not limited to the disclosed embodiments.

In this specification and the drawings, constituent elements having substantially the same functions or configurations are denoted by the same reference numerals, and redundant description thereof will be omitted.

### <Embodiment>

### [Schematic Configurations of Color Management System and Color Management Apparatus]

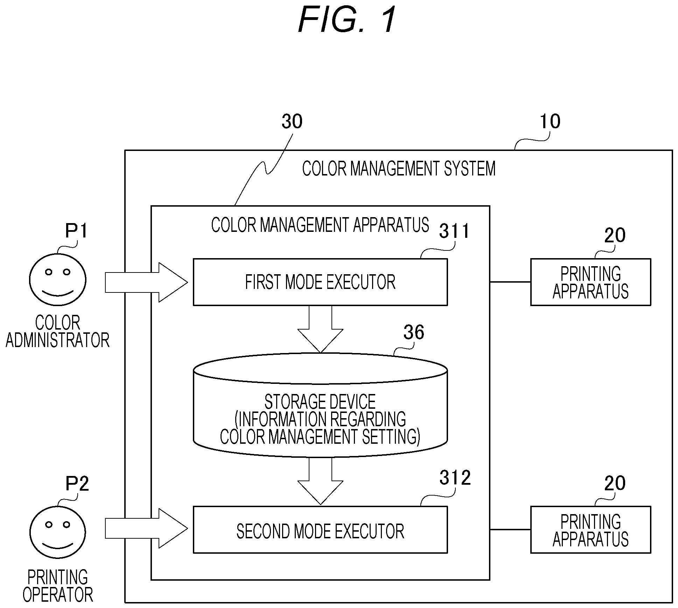

First, a schematic configuration of a color management system according to the embodiment of the present invention will be described. Fig. 1 is a diagram illustrating schematic configurations of the color management system 10 and a color management apparatus 30 according to the present embodiment. The color management system 10 includes at least one or more (two in Fig. 1) printing apparatuses 20 and the color management apparatus 30. The color management apparatus 30 is connected to each printing apparatus 20 and has a color management function for the printing apparatus 20. The printing apparatus 20 is an image forming apparatus that forms an image on a recording medium. The color management function includes a plurality of color management functions, which include color verification, profile creation, calibration, maximum density adjustment, and density balance adjustment.

The color verification is a function of verifying each color of a printed product by comparing a result of colorimetry of each color of a printed product with a color verification standard.

The profile creation is a function of creating an international color consortium (ICC) profile from the result of the colorimetry of each color of the printed product.

The calibration is a function of adjusting the gradation of each color based on the result of measuring each color of the printed product.

The maximum density adjustment is a function of adjusting the maximum density of each color based on the result of the colorimetry of each color of the printed product.

The density balance adjustment is a function of correcting density unevenness (in-plane unevenness) from the result of the colorimetry of each color of the printed product.

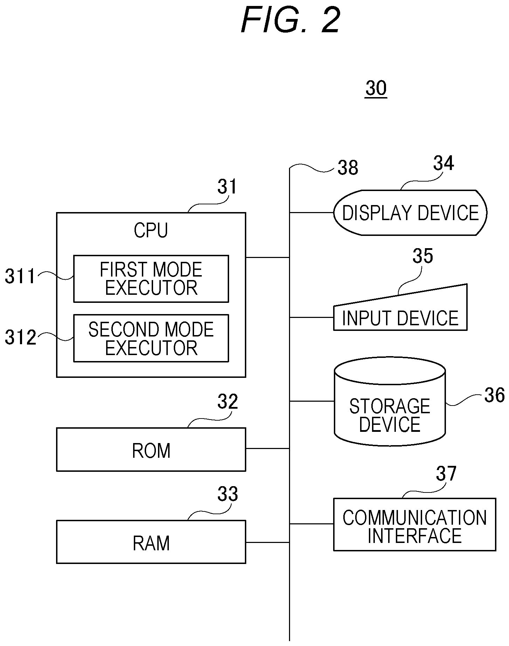

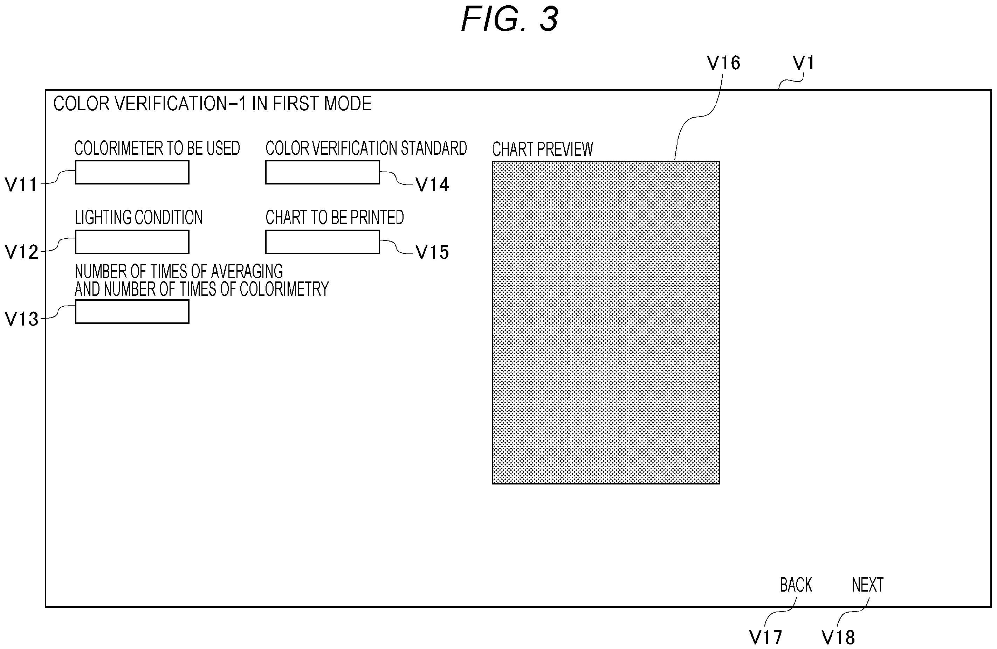

As illustrated in Fig. 1, the color management apparatus 30 includes a first mode executor 311, a second mode executor 312, and a storage device 36. The first mode executor 311 executes a first mode to perform color management setting including setting of a plurality of items regarding the color management function of the printing apparatus 20 through a plurality of steps, and perform the color management function. The second mode executor 312 executes a second mode to simplify at least one step among the plurality of steps to perform the color management setting, and perform the color management function. Here, the plurality of steps include a setting process of setting various setting screens (Figs. 3 to 8, Figs. 13 to 18, Fig. 23, and Fig. 24 described later) for setting the plurality of items regarding the color management function of the printing apparatus 20, and setting the various setting items in the various setting screens. In addition, execution results of the first mode executor 311 and the second mode executor 312 are transmitted to the printing apparatus 20 which is a management target via a communication interface 37 illustrated in Fig. 2 which will be described later. The execution results of the first mode executor 311 and the second mode executor 312 are information regarding various types of color management set in the various setting screens in the first mode and the second mode.

Note that the first mode can be switched to the second mode by a predetermined operation (e.g., an operation of pressing a predetermined button or link). Furthermore, in a case where trouble or the like occurs during execution of the second mode and the switching is permitted by the first mode, the second mode can be switched to the first mode by a predetermined operation (e.g., an operation of pressing a predetermined button or link to input authentication information such as a password). Further, when the second mode is switched to the first mode, the second mode executor 312 notifies the switching of the mode in accordance with a notification method set in the first mode.

The first mode is operated by a color administrator P1, and has various setting screens illustrated in Figs. 3 to 8, 13 to 18, 23, and 24 to be described later. The first mode executor 311 causes various setting screens for the first mode to be displayed, and stores, to the storage device 36, information regarding the color management setting set by the color administrator P1 in the first mode. In addition, since a color printed by the printing apparatus 20 varies depending on an attribute (sheet type, basis weight, color paper, or the like) of a recording medium such as a sheet to be used, the first mode executor 311 can perform the color management setting for each printing apparatus 20. The first mode executor 311 can also perform the color management setting for each color management function.

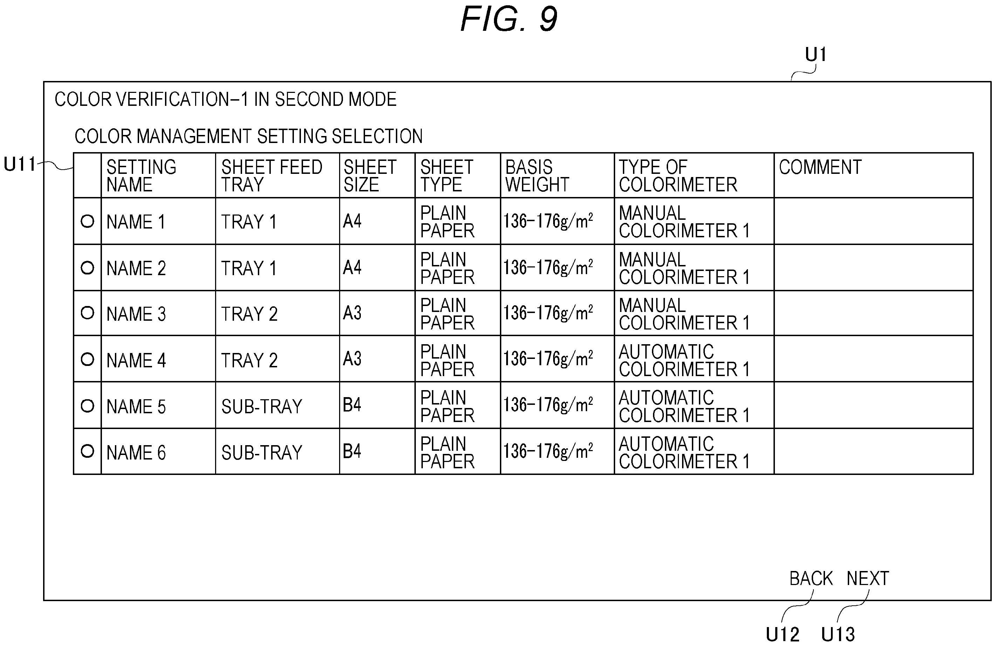

The second mode is operated by a printing operator P2, and has various setting screens illustrated in Figs. 9 to 12 and Figs. 19 to 22 described later. The number of setting screens in the second mode may be smaller than that in the first mode, and the number of setting items in a setting screen having the same configuration in the second mode may be smaller than that in the first mode. That is, the step of performing the color management setting in the second mode is more simplified than the step of performing the color management setting in the first mode. The second mode executor 312 reads, from the storage device 36, the information regarding the color management setting set by the color administrator P1 in the first mode, and causes various setting screens for the second mode to be displayed. Also, the second mode executor 312 selects the color management setting performed by the first mode executor 311, changes one or more of a plurality of items included in the selected color management setting, and performs the color management function.

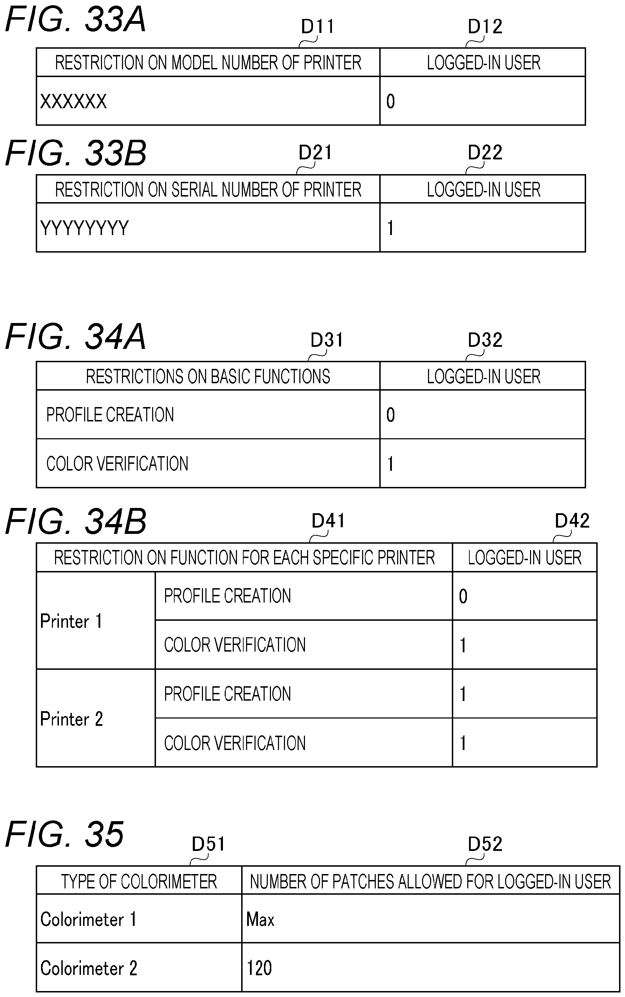

In addition, the second mode executor 312 automatically sets a selectable printing apparatus 20 among the printing apparatuses 20 based on printer restriction data (refer to Figs. 33A and 33B described later) registered in advance, and automatically sets a selectable color management function among the color management functions based on function restriction data (refer to Figs. 34A and 34B described later) registered in advance. For example, based on the function restriction data (see Fig. 34B described later), the second mode executor 312 automatically sets a selectable color management function among the plurality of color management functions for each of the printing apparatuses 20, and automatically sets a selectable printing apparatus 20 among the plurality of printing apparatuses 20 for each of the color management functions. In addition, for example, the second mode executor 312 can automatically set a selectable color management function among the plurality of color management functions for each of the model numbers of the printing apparatuses 20 based on the printer restriction data (refer to Fig. 33A described later). The second mode executor 312 can also automatically set a selectable color management function among the plurality of color management functions for each of the serial numbers of the printing apparatuses 20 based on printer restriction data (see Fig. 33B described later). In addition, the second mode executor 312 automatically sets, based on colorimeter restriction data (not illustrated) registered in advance, a selectable colorimeter that performs colorimetry on a printed product output by each of the printing apparatuses 20. Further, the second mode executor 312 automatically sets a selectable colorimetry chart and the number of patches of the colorimetry chart for each type of colorimeter based on color management setting restriction data (see Fig. 35 described later) registered in advance.

### [Hardware Configuration of Color Management Apparatus]

Next, a hardware configuration of the color management apparatus 30 according to the present embodiment will be described. The color management apparatus 30 is a terminal apparatus such as a computer or tablet used by the color administrator P1 or the printing operator P2 to manage a color for the printing apparatus 20. Fig. 2 is a block diagram illustrating an example of the hardware configuration of the color management apparatus 30 according to the present embodiment.

As illustrated in Fig. 2, the color management apparatus 30 includes a central processing unit (CPU) 31, a read only memory (ROM) 32, a random access memory (RAM) 33, a display device 34, an input device 35, a storage device 36, and a communication interface 37. The CPU 31, the ROM 32, the RAM 33, the display device 34, the input device 35, the storage apparatus 36, and the communication interface 37 are connected to each other by a bus 38 so as to be able to transmit and receive information data to and from each other.

The CPU 31 reads, from the ROM 32, a program code of software that implements various functions of the color management system 10, loads the program code into the RAM 33, and executes the program code. The CPU 31 includes the first mode executor 311 and the second mode executor 312. Note that a graphics processing unit (GPU) may be used in place of the CPU 31, or the CPU 31 and the GPU may be used in combination.

The ROM 32 includes, for example, a storage medium such as a nonvolatile memory and stores a program, data and the like which the CPU 31 executes and refers to.

The RAM 33 includes, for example, a storage medium such as a volatile memory and temporarily stores information necessary for each process to be performed by the CPU 31.

The display device 34 is, for example, a liquid crystal display monitor and displays various setting screens (see Figs. 3 to 28 described later) regarding color management, a result of processing performed by the color management apparatus 30, and the like. As the input device 35, for example, a keyboard, a mouse, or the like is used. The color administrator P1 or the printing operator P2 can perform predetermined operation input and instruction to the input device 35. Note that the display device 34 and the input device 35 are integrally formed as, for example, a touch screen.

The storage device 36 includes a non-transitory recording medium storing a computer readable program to be executed by the CPU 31, and is a hard disk drive (HDD) or the like. The storage device 36 stores a program for the CPU 31 to execute each function, an operating system (OS), a program such as a controller, and data. In addition, the storage device 36 stores the information of the color management setting set in the first mode, various kinds of restriction data (refer to Figs. 33A to 35 described later) for the second mode, and the like. Note that some of the programs and data stored in the storage device 36 may be stored in the ROM 32. Furthermore, the non-transitory recording medium storing the computer readable program to be executed by the CPU 31 is not limited to the HDD but may be, for example, a recording medium such as a solid state drive (SSD), a compact disc (CD-ROM), or a digital versatile disc (DVD-ROM).

For example, a network interface card (NIC) or the like is used as the communication interface 37. Various types of data can be transmitted and received between the apparatuses via a local area network (LAN), a dedicated line, or the like connected to a terminal of the NIC.

### [Color Verification Setting Screen in First Mode]

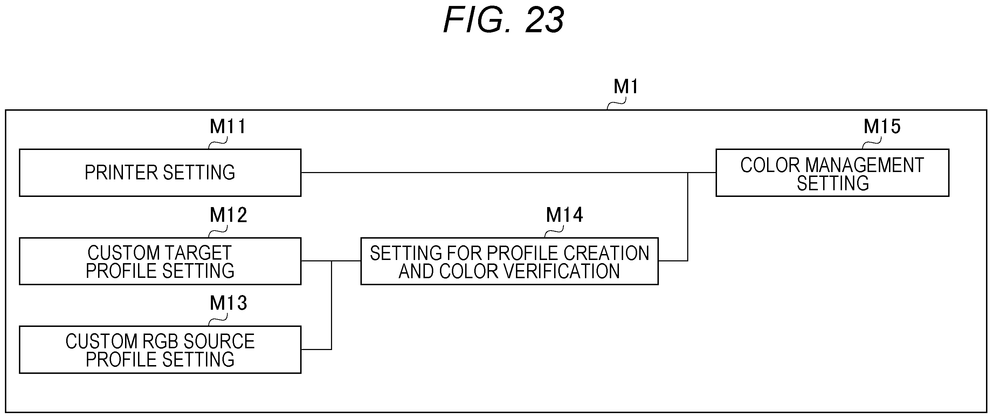

Next, a color verification setting screen in the first mode of the color management system 10 according to the present embodiment will be described with reference to Figs. 3 to 8. Setting screens illustrated in Figs. 3 to 8 are displayed under the control of the first mode executor 311. The color administrator P1 logs in to the color management system 10 including the color management apparatus 30, performs printer setting M11 illustrated in Fig. 23 described below, and then selects a printing apparatus 20 to be subjected to color management on a printer selection screen (not illustrated). After the printing apparatus 20 to be subjected to the color management is selected, when an "add" button or an "edit" button is pressed on a management screen for a setting M14 for profile creation and color verification illustrated in Fig. 23 described later, a color verification setting screen V1 in the first mode illustrated in Fig. 3 is displayed. Note that the configuration of the color verification setting screen in the first mode is not limited to the configuration examples illustrated in Figs. 3 to 8, and may be appropriately changed as necessary.

Fig. 3 is a diagram illustrating an example of the configuration of the color verification setting screen V1 in the first mode of the color management system 10 according to the present embodiment. The color verification setting screen V1 (color verification-1 in the first mode) illustrated in Fig. 3 is a first screen for setting each item regarding color verification in the first mode of the color management system 10. As illustrated in Fig. 3, on the left side of the color verification setting screen V1, a setting section V11 for "colorimeter to be used", a setting section V12 for "lighting condition", a setting section V13 for "number of times of averaging and number of times of colorimetry", a setting section V14 for "color verification standard", and a setting section V15 for "chart to be printed" are displayed. On the right side of the color verification setting screen V1, a display part V16 for "chart preview" is displayed. Further, a "back" button V17 and a "next" button V18 are displayed in a lower end portion of the color verification setting screen V1.

The setting section V11 for "colorimeter to be used" is a combo box for designating a colorimeter that performs colorimetry on a printed product (printed chart) output by the selected printing apparatus 20. The combo box of the setting section V11 for "colorimeter to be used" includes all colorimeters supported by the color management system 10. Note that since an interval for each patch constituting the chart, that is, the number of patches constituting the chart varies depending on the type of the colorimeter, it is necessary to designate the colorimeter in the setting section V11 for "colorimeter to be used".

The setting section V12 for "lighting condition" is a combo box for designating a lighting condition corresponding to the colorimeter set in the setting section V11 for "colorimeter to be used". Note that the "lighting condition" includes, for example, ISO (International Organization for Standardization) 13655 M0, ISO 13655 M1, or the like, and a selectable lighting condition varies depending on the type of the colorimeter.

The setting section V13 for "number of times of averaging and number of times of colorimetry" is a text box for setting the number of times of averaging and the number of times of colorimetry. A default value of each of the number of times of averaging and the number of times of colorimetry is "1". In a case where a printing error of the printing apparatus 20 is to be reduced, the same number of copies as the input number of times of averaging are printed, and colorimetry is performed on colors of the plurality of copies of a printed product. Furthermore, in a case where it is desired to reduce a colorimetry error of the colorimeter, colorimetry is performed on the same printed product the number of times of colorimetry that has been input.

The setting section V14 for "color verification standard" is a combo box for designating a color verification standard corresponding to the colorimeter set in the setting section V11 for "colorimeter to be used". Examples of the color verification standard include a verification standard of Fogra (Fogra Validation Printing), which is a German printing-related certification organization, and the Japan Color Certification System (Japan Color Proof Certification, etc.).

The setting section V15 for "chart to be printed" is a combo box for designating a chart for color verification. Note that a chart that can be selected in the setting section V15 for "chart to be printed" varies depending on the color verification standard set in the setting section V14 for "color verification standard".

The display part V16 for "chart preview" displays a preview of the chart designated in the setting section V15 for "chart to be printed".

The "back" button V17 is a button for returning to a screen before the transition to the color verification setting screen V1.

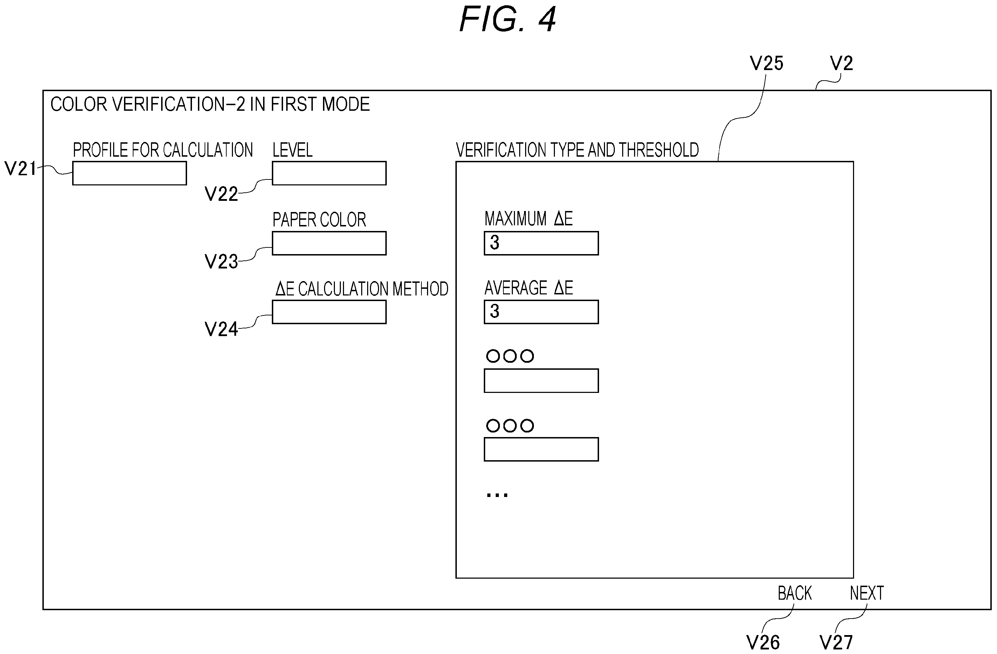

The "next" button V18 is a button for transitioning to the next screen (a color verification setting screen V2 illustrated in Fig. 4 described later) after the color verification setting screen V1.

Note that the operations of a "back" button and a "next" button in each of the subsequent screens are the same as those of the "back" button V17 and the "next" button V18, respectively, and therefore, redundant description is omitted.

Fig. 4 is a diagram illustrating an example of a configuration of a color verification setting screen V2 in the first mode of the color management system 10 according to the present embodiment. The color verification setting screen V2 (color verification-2 in the first mode) illustrated in Fig. 4 is the next screen after the color verification setting screen V1 described with reference to Fig. 3. On the left side of the color verification setting screen V2, a setting section V21 for "profile for calculation", a setting section V22 for "level", a setting section V23 for "paper color", and a setting section V24 for "ΔE calculation method" are displayed. On the right side of the color verification setting screen V2, a setting section V25 for "verification type and threshold" is displayed. In addition, a "back" button V26 and a "next" button V27 are displayed in a lower end portion of the color verification setting screen V2.

The setting section V21 for "profile for calculation" is a combo box for designating a target profile to be used for calculating an ideal value of a colorimetry result. In the combo box of the setting section V21 for "profile for calculation", all target profiles set in a custom target profile setting M12 illustrated in Fig. 23 described later are displayed.

The setting section V22 for "level" is a combo box for designating "standard" or "custom". When "standard" is selected, values of conditions ("paper color", "ΔE calculation method", "verification type and threshold", and the like) of a color verification standard set on the color verification setting screen V1 illustrated in Fig. 3 are used. When "custom" is selected, the values of the color verification standard set on the color verification setting screen V1 illustrated in Fig. 3 are not used, and values of the conditions are changed.

The setting section V23 for "paper color" is a combo box for designating a color of a printing sheet. A paper color that can be selected in the setting section V23 "paper color" is determined by the set color verification standard, but the paper color is changed by changing the level in the setting section V22 for "level".

The setting section V24 for "ΔE calculation method" is a combo box for designating a method of calculating ΔE which is a color misregistration between a colorimetry result of a printed product and an ideal value. Examples of the method of calculating ΔE include ΔEab, ΔE94, ΔE00, and the like. The calculation methods selectable in the setting section V24 for "ΔE calculation method" are determined by the set color verification standard, but the calculation method is changed when the level is changed in the setting section V22 for "level".

A plurality of verification types and thresholds corresponding to color verification standards can be designated in the setting section V25 for "verification type and threshold". The verification types include, for example, "maximum ΔE" and "average ΔE" illustrated in Fig. 4. Below each verification type, a text box in which a threshold corresponding to the verification type can be edited is displayed. The threshold corresponding to the verification type can be changed by changing the "level" in the setting section V22 for "level". In a case where a color is verified, for example, when a threshold of "maximum ΔE" is set, and the color misregistration ΔE between a result of performing colorimetry on a printed product and an ideal value is equal to or less than the threshold, the result of the color verification indicates that the color is acceptable.

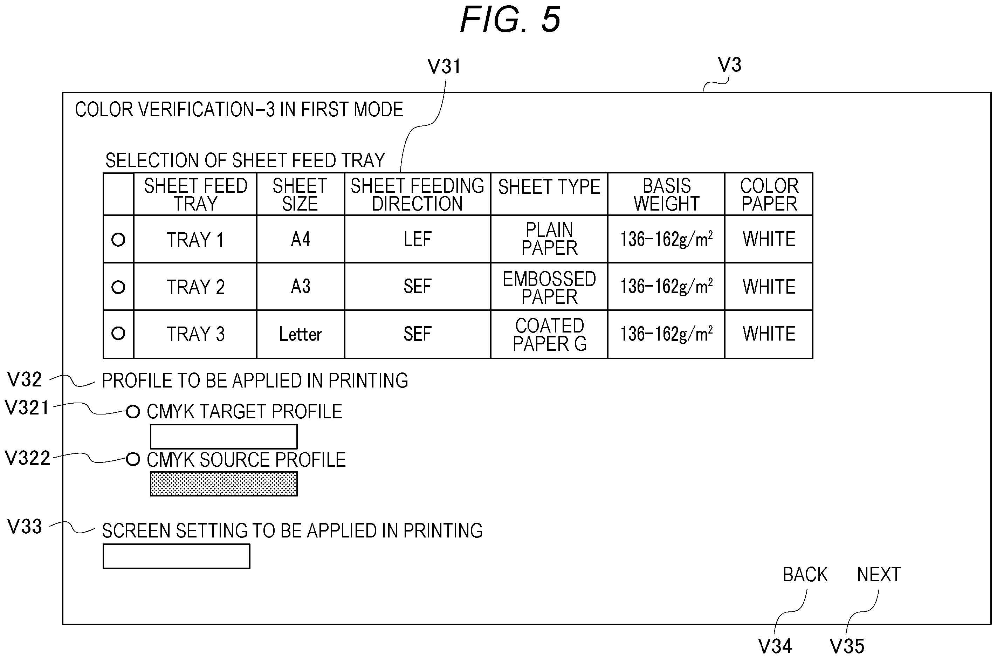

Fig. 5 is a diagram illustrating an example of a configuration of a color verification setting screen V3 in the first mode of the color management system 10 according to the present embodiment. The color verification setting screen V3 (color verification-3 in the first mode) illustrated in Fig. 5 is the next screen after the color verification setting screen V2 described with reference to Fig. 4. In an upper half part of the color verification setting screen V3, a "selection of sheet feed tray" section V31 is displayed. In a lower half part of the color verification setting screen V3, a setting section V32 for "profile to be applied in printing" and a section V33 for "screen setting to be applied in printing" are displayed. In addition, a "back" button V34 and a "next" button V35 are displayed in a lower end portion of the color verification setting screen V3.

A sheet feed tray for printing a chart can be selected in the "selection of sheet feed tray" section V31. The "selection of sheet feed tray" section V31 includes radio buttons, a "sheet feed tray" field, a "sheet size" field, a "sheet feeding direction" field, a "sheet type" field, a "basis weight" field, and a "color paper" field. When any one of the radio buttons in the "selection of sheet feed tray" section V31 is selected, setting values stored in respective fields corresponding to the radio button are selected. Note that selection of a sheet feed tray requires the printing apparatus 20 to support printing from the color management system 10. In a case where the printing apparatus 20 does not support printing from the color management system 10, only the sheet size can be set in the "selection of sheet feed tray" section V31.

A profile to be applied in printing can be selected in the setting section V32 for "profile to be applied in printing". The setting section V32 for "profile to be applied in printing" includes a radio button V321 for "CMYK target profile" and a radio button V322 for "CMYK source profile". Below each of the radio button V321 and the radio button V322, a combo box is displayed. When a radio button is selected, a combo box below the selected radio button becomes selectable (white). In addition, a combo box below a radio button that is not selected becomes non-selectable (gray). Note that CMYK represents the initials of cyan, magenta, yellow, and key plate (black, ink). In addition, in a case where the printing apparatus 20 does not support printing from the color management system 10, the combo box below the radio button V321 for "CMYK target profile" and the combo box below the radio button V322 for "CMYK source profile" become non-selectable (gray).

The section V33 for "screen setting to be applied in printing" is a combo box for designating a screen to be applied in printing. In the combo box, for example, "screen 1/dot 190", "screen 2/dot 175", "stochastics/FM3", "custom screen", or the like is displayed. Note that in a case where the printing apparatus 20 does not support printing from the color management system 10, the section V33 for "screen setting to be applied in printing" becomes non-selectable (gray).

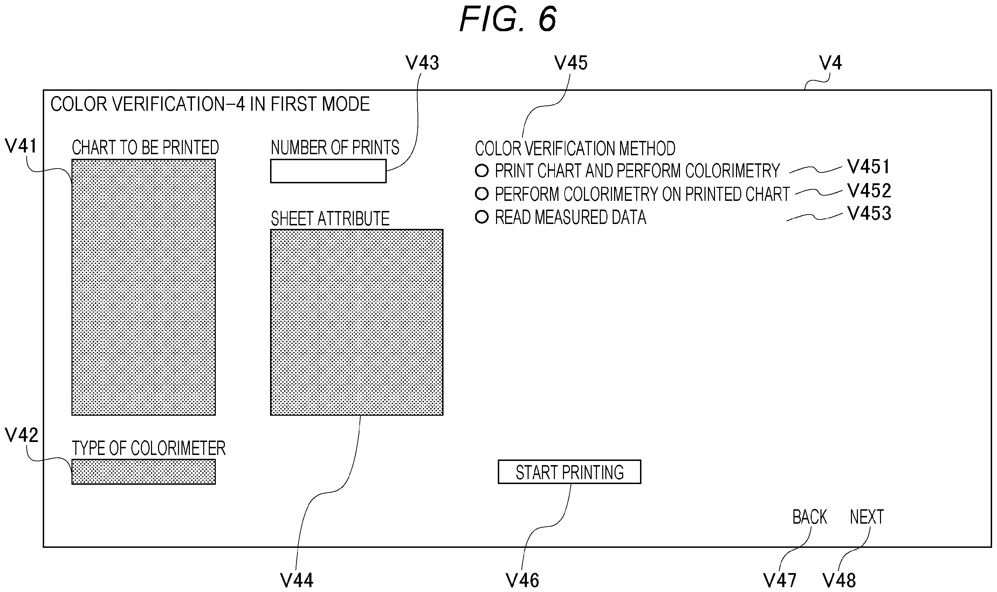

Fig. 6 is a diagram illustrating an example of a configuration of a color verification setting screen V4 in the first mode of the color management system 10 according to the present embodiment. The color verification setting screen V4 illustrated in Fig. 6 is the next screen after the color verification setting screen V3 illustrated with reference to Fig. 5. On the left side of the color verification setting screen V4, a display part V41 for "chart to be printed", a display part V42 for "type of colorimeter", a setting section V43 for "number of prints", and a display part V44 for "sheet attribute" are displayed. On the right side of the color verification setting screen V4, a selection section V45 for "color verification method" and a "start printing" button V46 are displayed. In addition, a "back" button V47 and a "next" button V48 are displayed in a lower end portion of the color verification setting screen V4.

The chart set in the setting section V15 for "chart to be printed" in the color verification setting screen V1 illustrated in Fig. 3 is displayed in the display part V41 for "chart to be printed".

The type of colorimeter set in the setting section V11 for "colorimeter to be used" in the color verification setting screen V1 illustrated in Fig. 3 is displayed in the display part V42 for "type of colorimeter".

The setting section V43 for "number of prints" is a text box for setting the number of copies in which the chart is printed.

In the display part V44 for "sheet attribute", a sheet attribute set in the "selection of sheet feed tray" section V31 of the color verification setting screen V3 illustrated in Fig. 5 is displayed.

The selection section V45 for "color verification method" includes a "print chart and perform colorimetry" radio button V451, a "perform colorimetry on printed chart" radio button V452, and a "read measured data" radio button V453. When the "print chart and perform colorimetry" radio button V451 is selected, a method of printing a chart displayed in the display part V41 for "chart to be printed" and performing colorimetry on the chart is selected. When the "perform colorimetry on printed chart" radio button V452 is selected, a method of performing colorimetry on an already printed chart is selected. When the "read measured data" radio button V453 is selected, a method of reading and using a colorimetry result of a chart already subjected to colorimetry is selected.

When the "start printing" button V46 is pressed, the chart displayed in the display part V41 for "chart to be printed" is printed.

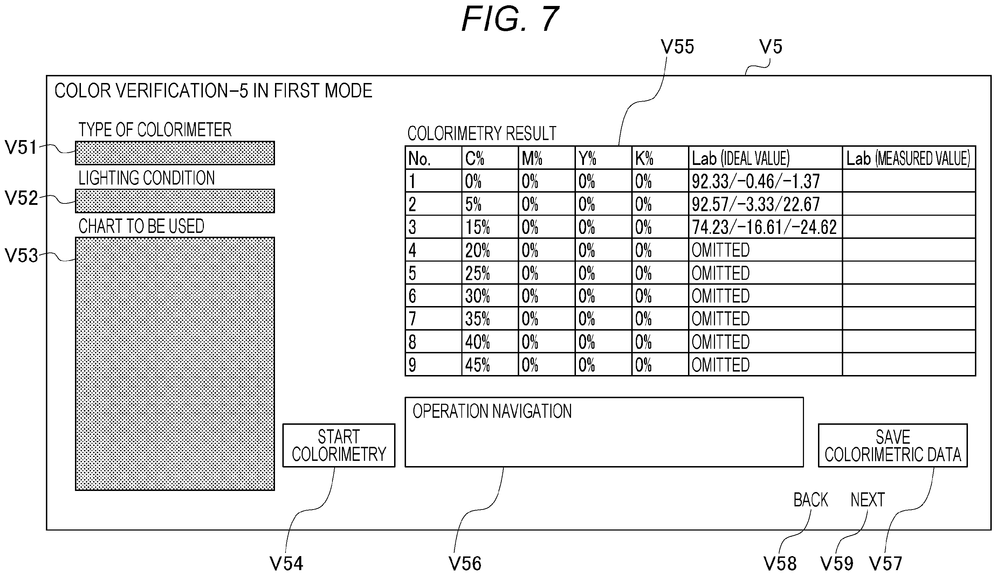

Fig. 7 is a diagram illustrating an example of a configuration of a color verification setting screen V5 in the first mode of the color management system 10 according to the present embodiment. The color verification setting screen V5 (color verification-5 in the first mode) illustrated in Fig. 7 is the next screen after the color verification setting screen V4 described with reference to Fig. 6. On the left side of the color verification setting screen V5, a display part V51 for "type of colorimeter", a display part V52 for "lighting condition", a display part V53 for "chart to be used", and a "start colorimetry" button V54 are displayed. On the right side of the color verification setting screen V5, a display part V55 for "colorimetry result", a display part V56 for "operation navigation", and a "save colorimetric data" button V57 are displayed. In addition, a "back" button V58 and a "next" button V59 are displayed in a lower end portion of the color verification setting screen V5.

The type of colorimeter set in the setting section V11 for "colorimeter to be used" in the color verification setting screen V1 illustrated in Fig. 3 is displayed in the display part V51 for "type of colorimeter".

The lighting condition set in the setting section V12 for "lighting condition" in the color verification setting screen V1 illustrated in Fig. 3 is displayed in the display part V52 for "lighting condition".

In the display part V53 for "chart to be used", a chart to be used for colorimetry is displayed.

When the colorimetry is performed in the chart displayed on the display part V53 for "chart to be used", a color of a part where the colorimetry is performed changes in real time. In addition, the transmittance of the chart before the colorimetry is 60%, and the transmittance of the chart after the colorimetry is 0%. In addition, when a column is mistaken in the colorimetry, an error dialog is displayed.

When the "start colorimetry" button V54 is pressed, colorimetry on the chart displayed in the display part V53 for "chart to be used" is started.

In the display part V55 for "colorimetry result", results of the colorimetry on the chart displayed in the display part V53 for "chart to be used" are displayed. The colorimetry results corresponding to respective patches constituting the chart are displayed in order from the top in the display part V55 for "colorimetry result". A "No." field illustrated in Fig. 7 indicates numbers corresponding to the patches subjected to the colorimetry. The colorimetry result of each patch includes fields for measured "C%", "M%", "Y%", "K%", "Lab (ideal value)", and "Lab (measured value)". The Lab (Lab color space) is a color space, the "L" value represents brightness, and the "a" and "b" values represent red and blue tints, respectively.

In the fields for "C%", "M%", "Y%", and "K%", the ratios of pixels of the measured C, M, Y, and K to all pixels of the patches are displayed, for example, in units of %.

In the field for "Lab (ideal value)", an ideal value of Lab for evaluating a colorimetric value registered in advance is displayed for each patch of the chart.

In the field for "Lab (colorimetric value)", a colorimetric value of Lab corresponding to each patch of the chart is displayed.

In the display part V56 for "operation navigation", an operation procedure necessary for colorimetry is displayed. For example, in a case where white calibration is required before colorimetry, a text indicating that white calibration is required before colorimetry is displayed.

When the "save colorimetric data" button V57 is pressed, the colorimetry results are saved in the storage device 36 of the color management apparatus 30.

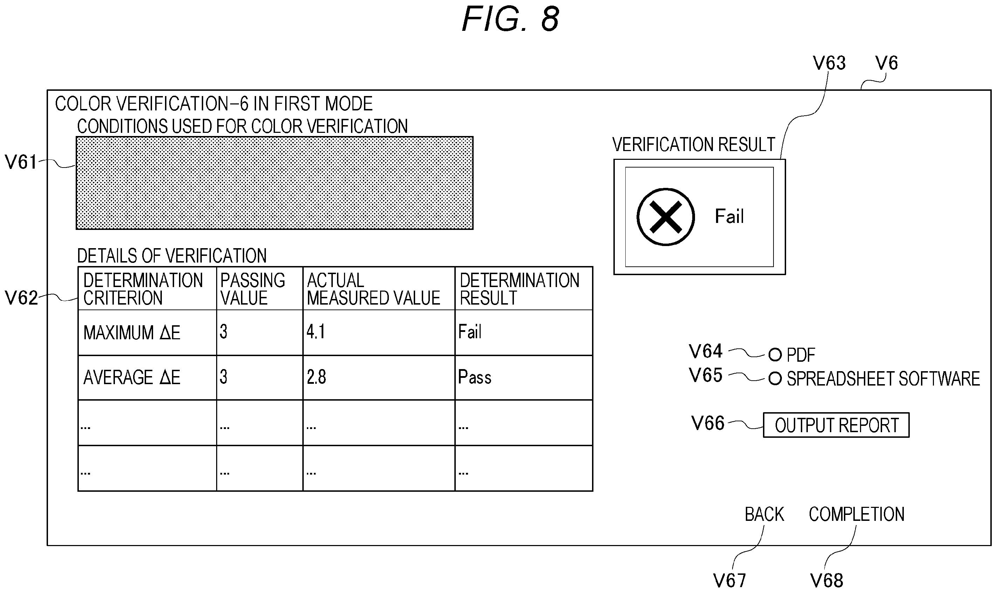

Fig. 8 is a diagram illustrating an example of a configuration of a color verification setting screen V6 in the first mode of the color management system 10 according to the present embodiment. The color verification setting screen V6 (color verification-6 in the first mode) illustrated in Fig. 8 is the next screen after the color verification setting screen V5 described with reference to Fig. 7. On the left side of the color verification setting screen V6, a display part V61 for "conditions used for color verification" and a display part V62 for "details of verification" are displayed. On the right side of the color verification setting screen V6, a display part V63 for "verification result", a "PDF" radio button V64, a "spreadsheet software" radio button V65, and an "output report" button V66 are displayed. In addition, a "back" button V67 and a "complete" button V68 are displayed in a lower end portion of the color verification setting screen V6.

The conditions used for the color verification, for example, a standard for the color verification, paper color, the ΔE calculation method, the type of colorimeter, the lighting condition, the number of times of averaging, the number of times of colorimetry, and the like are displayed in the display part V61 for "conditions used for color verification".

A "determination criterion", a "passing value", an "actual measured value", and a "determination result" are displayed in the display part V62 for "details of verification". The "determination criterion" is a verification type set in the setting section V25 for "verification type and threshold" in the color verification setting screen V2 illustrated in Fig. 4, and the "passing value" is a threshold corresponding to the verification type. In a case where the "actual measured value" of ΔE exceeds the "passing value", information indicating failure (e.g., "Fail") is displayed in the "determination result". If the "actual measured value" of ΔE is equal to or smaller than the "passing value", information indicating pass (e.g., "Pass") is displayed in the "determination result".

A result of the color verification is displayed in the display part V63 for "verification result". Here, in a case where all of "determination results" are pass ("Pass"), a text ("Pass") and a mark (e.g., a double circle mark) indicating pass are displayed in the display part V63 for "verification result". In addition, when failure ("Fail")) is indicated in a "determination result", a text and a mark (e.g., a cross mark (failure) surrounded by a circle) indicating failure are displayed in the display part V63 for "verification result". The display form of the "verification result" is not limited to the above-described display form, and may be, for example, a form in which only one of a text and a mark indicating the verification result is displayed.

When the "PDF" radio button V64 is selected and the "output report" button V66 is pressed, various kinds of setting information regarding color verification and a verification result regarding color verification are output in a PDF format. The various kinds of setting information regarding the color verification and the verification result regarding the color verification are, that is, displayed information of the display part V61 for "conditions used for color verification", the display part V62 for "details of verification", and the display part V63 for "verification result".

In a case where the "spreadsheet software" radio button V65 is selected and the "output report" button V66 is pressed, various kinds of setting information regarding color verification and a verification result regarding color verification are output in a format of spreadsheet software.

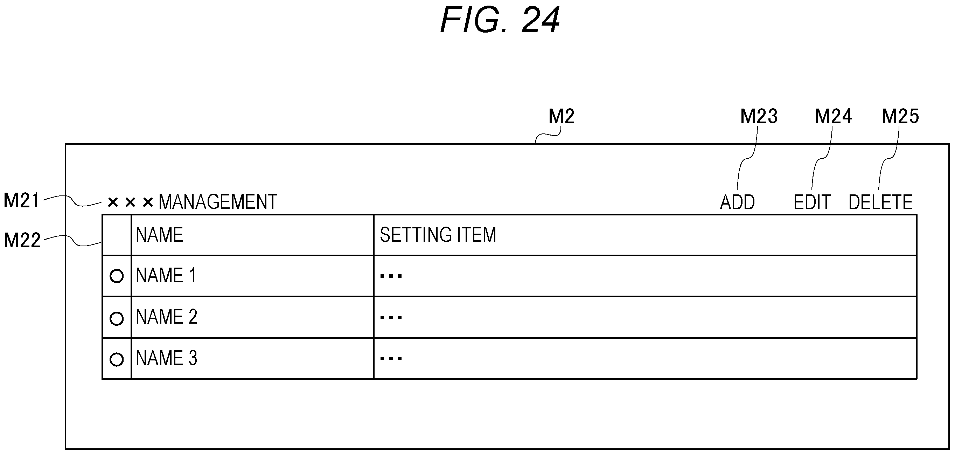

When the "complete" button V68 is pressed, the screen transitions to a higher-level screen of the color verification setting screen, that is, a management screen for the setting for profile creation and color verification having the configuration of the management screen illustrated in Fig. 24 described later.

### [Color Verification Setting Screen in Second Mode]

Next, a color verification setting screen in the second mode of the color management system 10 according to the present embodiment will be described with reference to Figs. 9 to 12. Each of setting screens illustrated in Figs. 9 to 12 is displayed under the control of the second mode executor 312. Note that the configuration of the color verification setting screen in the second mode is not limited to the configuration examples illustrated in Figs. 9 to 12, and may be appropriately changed as necessary.

Fig. 9 is a diagram illustrating an example of a configuration of a color verification setting screen U1 in the second mode (color verification-1 in the second mode) of the color management system 10 according to the present embodiment. In a center portion of the color verification setting screen U1, a "color management setting selection" section U11 is displayed. Further, a "back" button U12 and a "next" button U13 are displayed in a lower end portion of the color verification setting screen U1.

In the "color management setting selection" section U11, information regarding color management settings set by the color administrator P1 in a color management setting M15 (illustrated in Fig. 23 described later) and stored in the storage device 36 is displayed in a list. A radio button is arranged at the head of each piece of information of each of the color management settings. The information regarding each of the color management settings includes information regarding "setting name", "sheet feed tray", "sheet size", "sheet type", "basis weight", "type of colorimeter", and "comment". The information of each of the color management settings may include information other than the various setting information described above. When any one of the radio buttons in the "color management setting selection" section U11 is selected, information regarding the color management setting corresponding to the radio button is selected.

The information of "setting name" is information indicating a name associated with the information regarding the color management setting set by the color administrator P1 in the first mode, for example, "name 1", "name 2", or the like.

The information of "sheet feed tray" is information regarding a sheet feed tray set by the color administrator P1 in the first mode, for example, "tray 1", "tray 2", or the like.

The information of the "sheet size" is information regarding a sheet size set by the color administrator P1 in the first mode, for example, "A4", "A3", or the like.

The information of "sheet type" is information regarding a type of sheet set by the color administrator P1 in the first mode, for example, "plain paper" or the like.

The information of "basis weight" is information regarding the basis weight of the sheet set by the color administrator P1 in the first mode, for example, "136-176g/m²" or the like.

The information of the "type of colorimeter" is information regarding the type of colorimeter set by the color administrator P1 in the first mode, for example, "manual colorimeter 1", "automatic colorimeter 1", or the like.

In the information of "comment", comments such as explanations and precautions for the information of the color management setting input by the color administrator P1 in the first mode are displayed.

The "back" button U12 is a button for returning to the screen before the transition to the color verification setting screen U1.

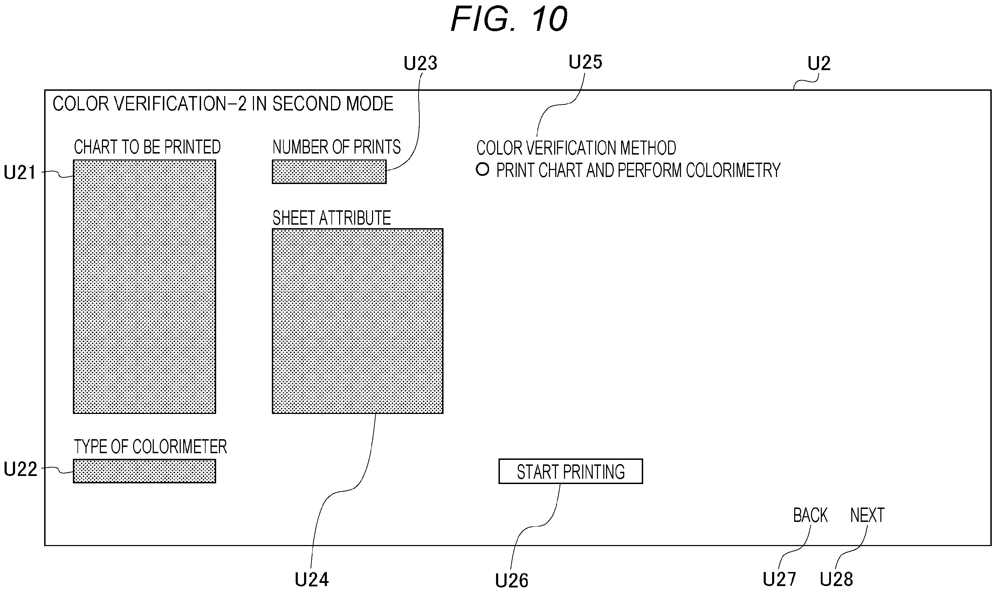

The "next" button U13 is a button for transitioning to the next screen (a color verification setting screen U2 illustrated in Fig. 10 described later) after the color verification setting screen U1.

Note that operations of a "back" button and a "next" button in each of the subsequent screens are the same as those of the "back" button U12 and the "next" button U13, respectively, and therefore, redundant description is omitted.

Fig. 10 is a diagram illustrating an example of a configuration of the color verification setting screen U2 in the second mode of the color management system 10 according to the present embodiment. The color verification setting screen U2 (color verification-2 in the second mode) illustrated in Fig. 10 is the next screen after the color verification setting screen U1 described with reference to Fig. 9. As can be seen from comparison between Fig. 10 and Fig. 6, the color verification setting screen U2 in the second mode has the same configuration as that of the color verification setting screen V4 in the first mode, but has a smaller number of setting items than that on the color verification setting screen V4, that is, a smaller number of steps than that in the first mode. In the color verification setting screen U2 in the second mode illustrated in Fig. 10, a setting section U23 for "the number of prints" is in an unchangeable state. This is because the number of prints set in the setting section V4 for "number of prints" on the color verification setting screen V43 in the first mode is used in the second mode. In addition, on the color verification setting screen U2 in the second mode, a method which can be selected in the selection section U25 for "color verification method" is only "print chart and perform colorimetry". The description of the same screen components of the color verification setting screen U2 in the second mode as those of the color verification setting screen V4 in the first mode will be omitted.

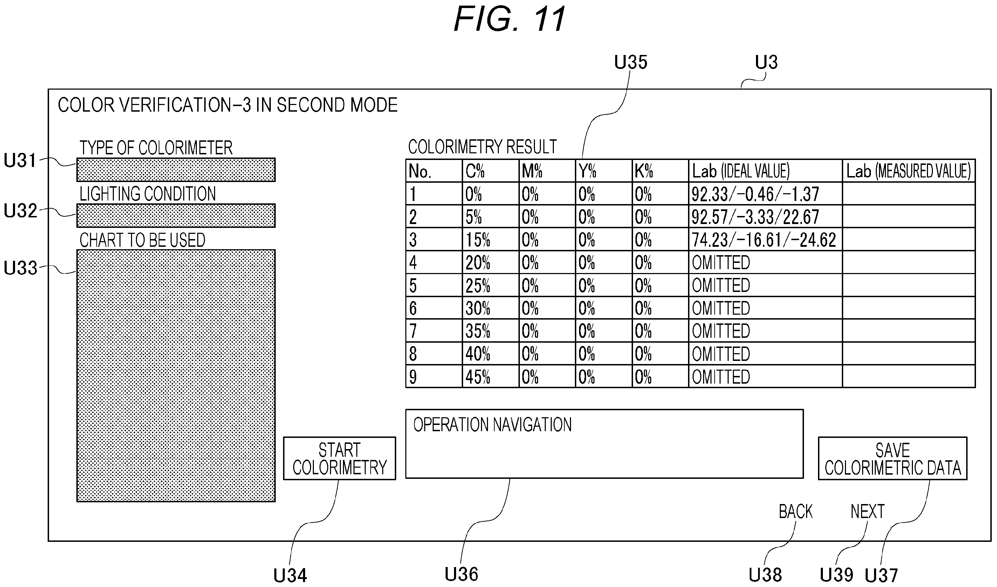

Fig. 11 is a diagram illustrating an example of a configuration of a color verification setting screen U3 in the second mode of the color management system 10 according to the present embodiment. The color verification setting screen U3 (color verification-3 in the second mode) illustrated in Fig. 11 is the next screen after the color verification setting screen U2 described with reference to Fig. 10. As can be seen from comparison between Fig. 11 and Fig. 7, the color verification setting screen U3 in the second mode has the same configuration as that of the color verification setting screen V5 in the first mode. Therefore, redundant description of the color verification setting screen U3 in the second mode is omitted.

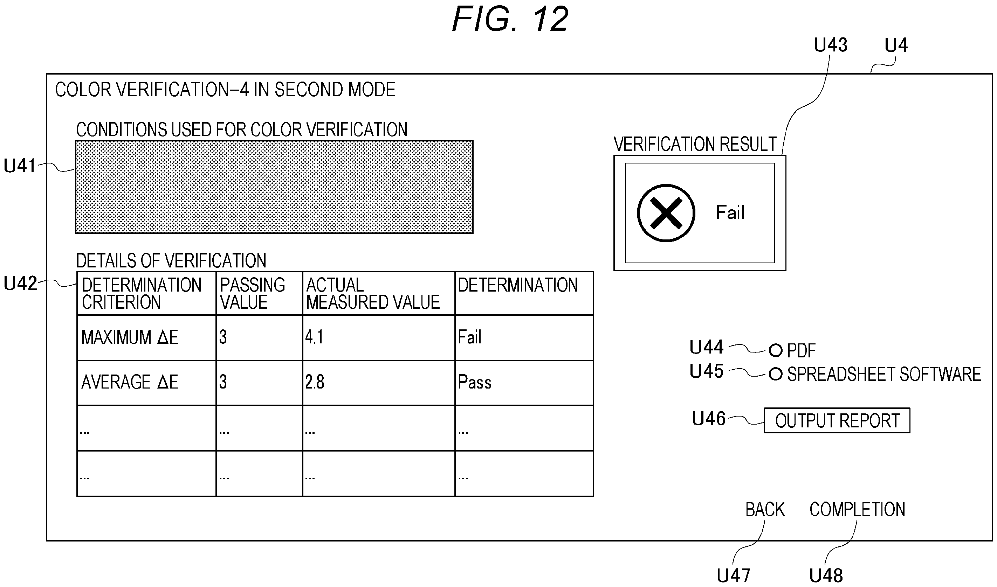

Fig. 12 is a diagram illustrating an example of a configuration of a color verification setting screen U4 in the second mode of the color management system 10 according to the present embodiment. The color verification setting screen U4 (color verification-4 in the second mode) illustrated in Fig. 12 is the next screen after the color verification setting screen U3 described with reference to Fig. 11. As can be seen by comparing Fig. 12 and Fig. 8, the color verification setting screen U4 in the second mode has the same configuration as that of the color verification setting screen V6 in the first mode. Therefore, redundant description of the color verification setting screen U4 in the second mode is omitted.

### [Profile Creation Screen in First Mode]

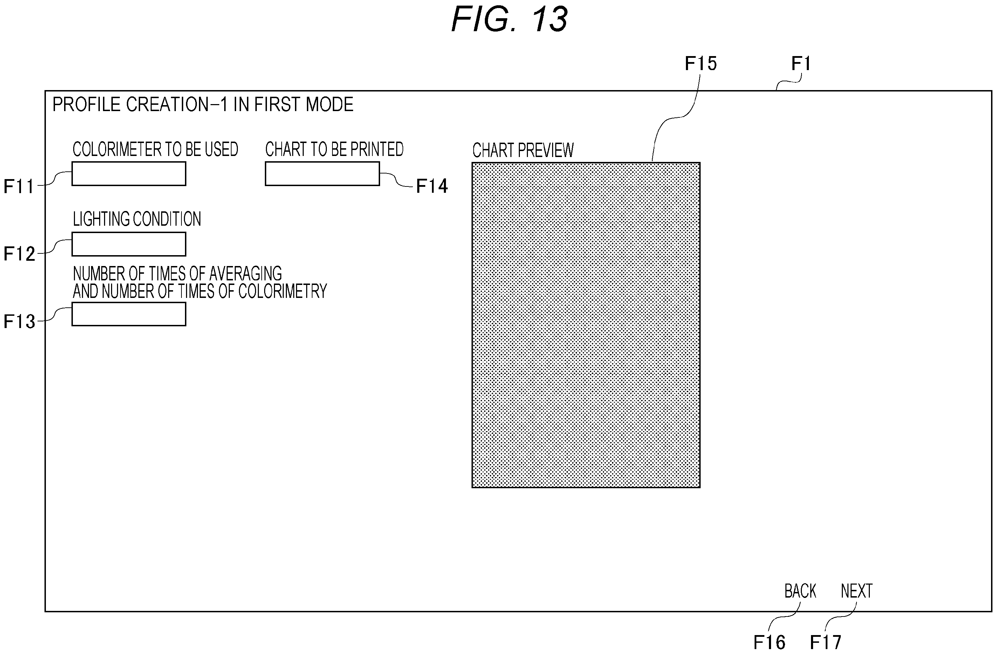

Next, a profile creation screen in the first mode of the color management system 10 according to the present embodiment will be described with reference to Figs. 13 to 18. Each of setting screens illustrated in Figs. 13 to 18 is displayed under the control of the first mode executor 311. Note that the configuration of the profile creation screen in the first mode is not limited to the configuration examples illustrated in Figs. 13 to 18 and may be appropriately changed as necessary.

Fig. 13 is a diagram illustrating an example of a configuration of a profile creation screen F1 (profile creation-1 in the first mode) in the first mode of the color management system 10 according to the present embodiment. As can be seen from a comparison between Fig. 13 and Fig. 3, components of the profile creation screen F1 in the first mode are the same as the components of the color verification setting screen V1 in the first mode, except for the setting section V14 for "color verification standard", and redundant description thereof will be omitted. A chart that can be selected in the setting section F1 for "chart to be printed" on the profile creation screen F14 in the first mode is a chart to be used for creating a profile.

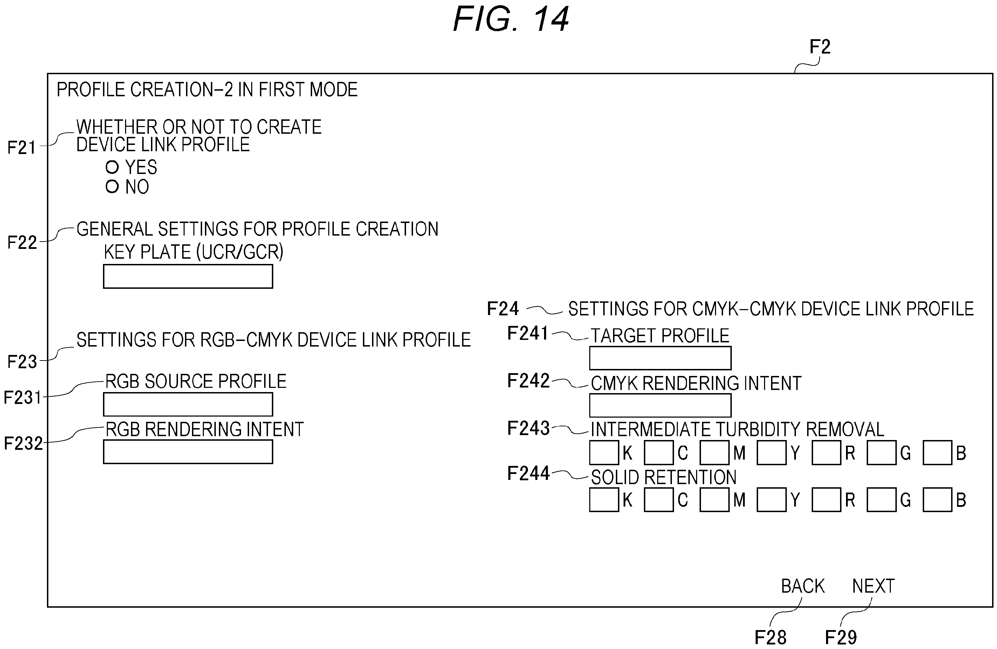

Fig. 14 is a diagram illustrating an example of a configuration of a profile creation screen F2 in the first mode of the color management system 10 according to the present embodiment. The profile creation screen F2 (profile creation-2 in the first mode) in the first mode illustrated in Fig. 14 is the next screen after the profile creation screen F1 in the first mode described with reference to Fig. 13.

On the left side of the profile creation screen F2, a selection section F21 for selecting "whether or not to create device link profile", a section F22 for "general settings for profile creation", and a section F23 for "settings for RGB-CMYK device link profile" are displayed in order from the top. Further, a section F24 for "settings for CMYK-CMYK device link profile" is displayed on the right side of the profile creation screen F2.

The selection section F21 for selecting "whether or not to create a device link profile" has a "Yes" radio button and a "No" radio button. In a case where the "Yes" radio button is selected, it is set to create a device link profile. In this case, the section F22 for "general settings for profile creation", the section F23 for "settings for RGB-CMYK device link profile", and the section F24 for "settings for CMYK-CMYK device link profile" are displayed. In addition, in a case where the "No" radio button is selected, it is set not to create a device link profile. In this case, only the section F22 for "general settings for profile creation" is displayed, and the section F23 for "settings for RGB-CMYK device link profile" and the section F24 for "settings for CMYK-CMYK device link profile" are not displayed. Note that RGB is an expression in which the initials of red, green, and blue are combined.

The section F22 for "general settings for profile creation" has a combo box for a key plate (UCR/GCR). In the combo box, under color removal (UCR) or gray component replacement (GCR) can be selected. The UCR prevents toner from being excessively used in a shadow part. The GCR stabilizes the quality of gray in a highlighted part.

The section F23 for "settings for RGB-CMYK device link profile" has a combo box F231 for "RGB source profile" and a combo box F232 for "RGB rendering intent". In the combo box F231 for "RGB source profile", a preset representative profile, a registered custom profile, or the like can be selected. In the combo box F232 for "RGB rendering intent", a rendering intent supported by the printing apparatus 20 can be selected.

The section F24 for "settings for CMYK-CMYK device link profile" has a combo box F241 for "target profile" and a combo box F242 for "CMYK rendering intent". The section F24 for "settings for CMYK-CMYK device link profile" includes a setting section F243 for "intermediate turbidity removal" and a setting section F244 for "solid retention".

In the combo box F241 for "target profile", a preset representative profile, a registered custom profile, or the like can be selected. In the combo box F242 for "CMYK rendering intent", a rendering intent supported by the printing apparatus 20 can be selected.

The setting section F243 for "intermediate turbidity removal" has check boxes corresponding to the respective colors of "K", "C", "M", "Y", "R", "G", and "B". Intermediate turbidity removal is set for a color corresponding to a checked checkbox. The setting section F244 for "solid retention" has check boxes corresponding to the respective colors of "K", "C", "M", "Y", "R", "G", and "B". Solid retention is set for a color corresponding to a checked checkbox.

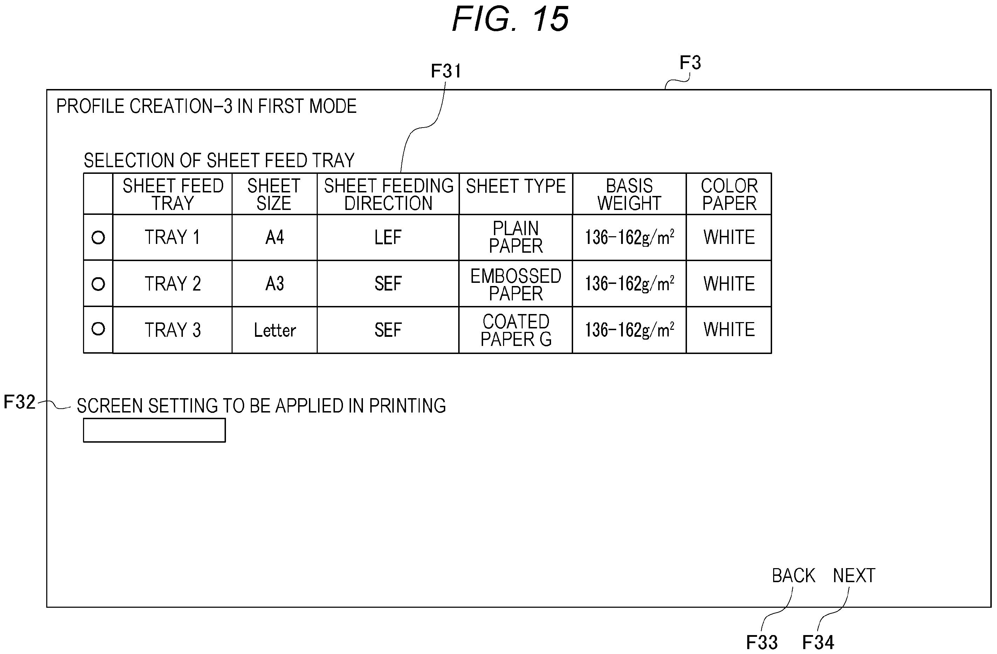

Fig. 15 is a diagram illustrating an example of a configuration of a profile creation screen F3 (profile creation-3 in the first mode) in the first mode of the color management system 10 according to the present embodiment. The profile creation screen F3 (profile creation-3 in the first mode) in the first mode illustrated in Fig. 15 is the next screen after the first mode profile creation screen F2 described with reference to Fig. 14. As can be seen from a comparison between Fig. 15 and Fig. 5, components of the profile creation screen F3 in the first mode are the same as the components of the color verification setting screen V3 in the first mode, except for the setting section V32 for "profile to be applied in printing", and redundant description thereof will be omitted.

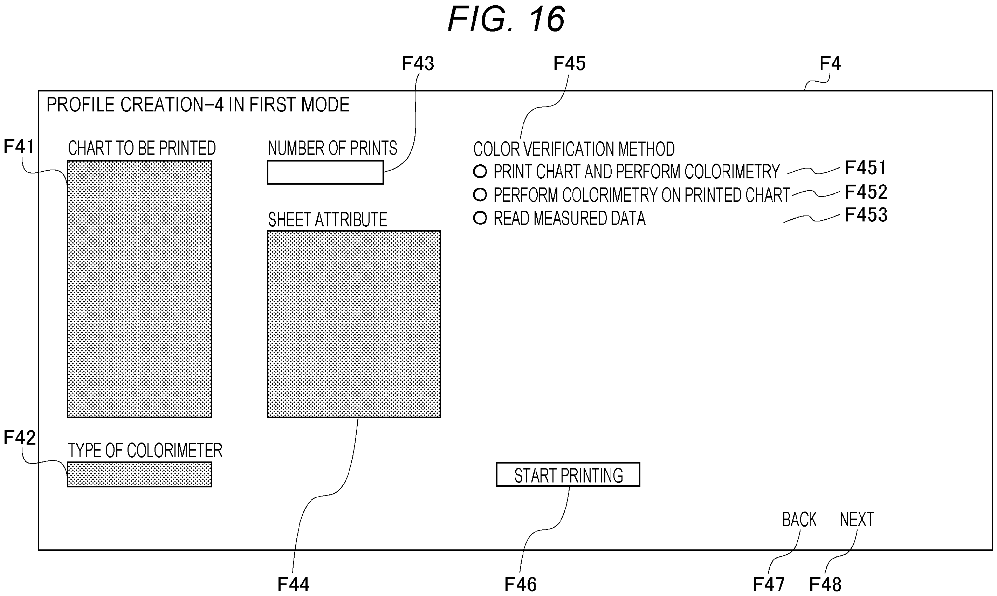

Fig. 16 is a diagram illustrating an example of a configuration of a profile creation screen F4 in the first mode of the color management system 10 according to the present embodiment. The profile creation screen F4 (profile creation-4 in the first mode) in the first mode illustrated in Fig. 16 is the next screen after the profile creation screen F3 in the first mode described with reference to Fig. 15. The profile creation screen F4 illustrated in Fig. 16 has the same configuration as that of the color verification setting screen V4 in the first mode illustrated in Fig. 6, and therefore, redundant description will be omitted.

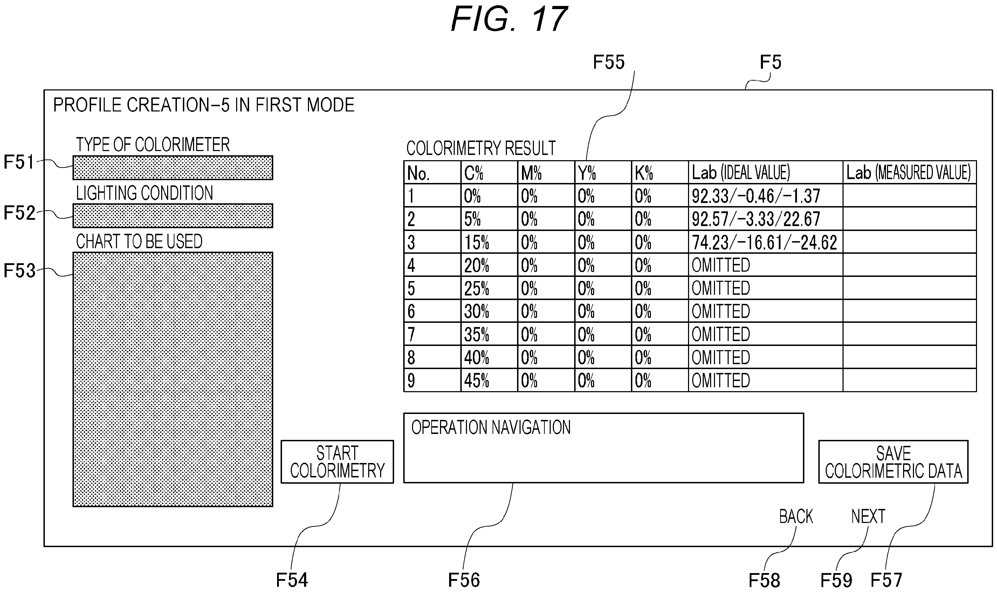

Fig. 17 is a diagram illustrating an example of a configuration of a profile creation screen F5 in the first mode of the color management system 10 according to the present embodiment. The profile creation screen F5 (profile creation-5 in the first mode) in the first mode illustrated in Fig. 17 is the next screen after the profile creation screen F4 in the first mode described with reference to Fig. 16. The profile creation screen F5 illustrated in Fig. 17 has the same configuration as that of the color verification setting screen V5 in the first mode illustrated in Fig. 7, and therefore, redundant description will be omitted.

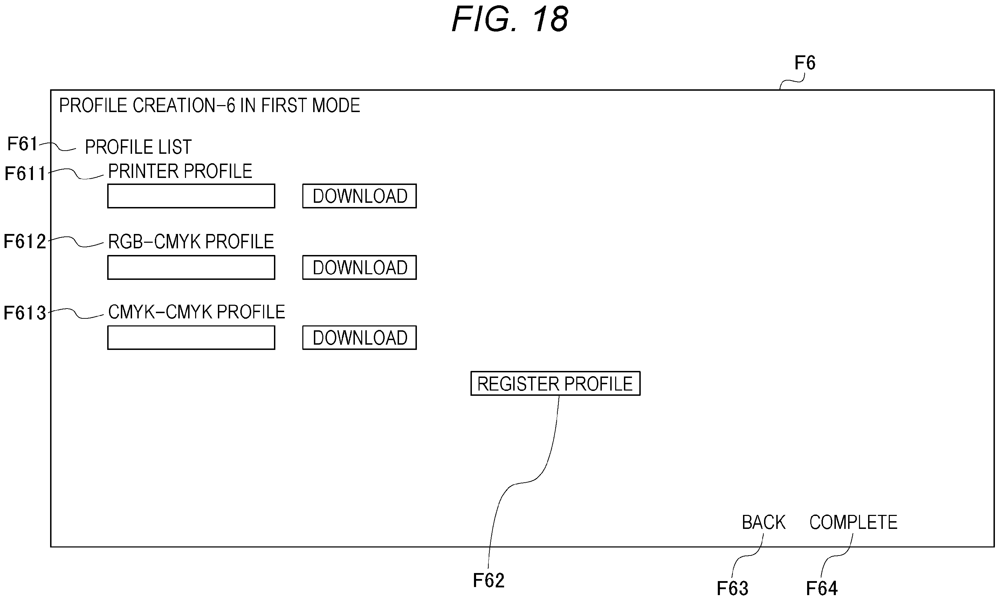

Fig. 18 is a diagram illustrating an example of a configuration of a profile creation screen F6 in the first mode of the color management system 10 according to the present embodiment. The profile creation screen F6 (profile creation-6 in the first mode) in the first mode illustrated in Fig. 18 is the next screen after the profile creation screen F5 in the first mode described with reference to Fig. 17.

On the profile creation screen F6, a display part F61 for "profile list" and a "register profile" button F62 are displayed. Furthermore, a "back" button F63 and a "complete" button F64 are displayed in a lower end portion of the profile creation screen F6.

The display part F61 for "profile list" includes a display part F611 for "printer profile" created, a display part F612 for "RGB-CMYK profile", and a display part F613 for "CMYK-CMYK profile".

The display part F611 for "printer profile" includes a combo box in which a created printer profile can be selected, and a "download" button. When the "download" button is pressed, the printer profile selected in the combo box is downloaded in a file format.

The display part F612 for "RGB-CMYK profile" has a combo box in which a created RGB-CMYK profile can be selected and a "download" button. When the "download" button is pressed, the RGB-CMYK profile selected in the combo box is downloaded in a file format.

The display part F613 for "CMYK-CMYK profile" has a combo box in which a prepared CMYK-CMYK profile can be selected, and a "download" button.

When the "download" button is pressed, the CMYK-CMYK profile selected in the combo box is downloaded in a file format.

When the "register profile" button F62 is pressed, various profiles selected in the display part F61 for "profile list" are registered in the printing apparatus 20.

When the "complete" button F64 is pressed, the screen transitions to a higher-level screen of the profile creation screen, that is, a management screen for the setting for profile creation and color verification having the configuration of the management screen illustrated in Fig. 24 described later.

### [Profile Creation Screen in Second Mode]

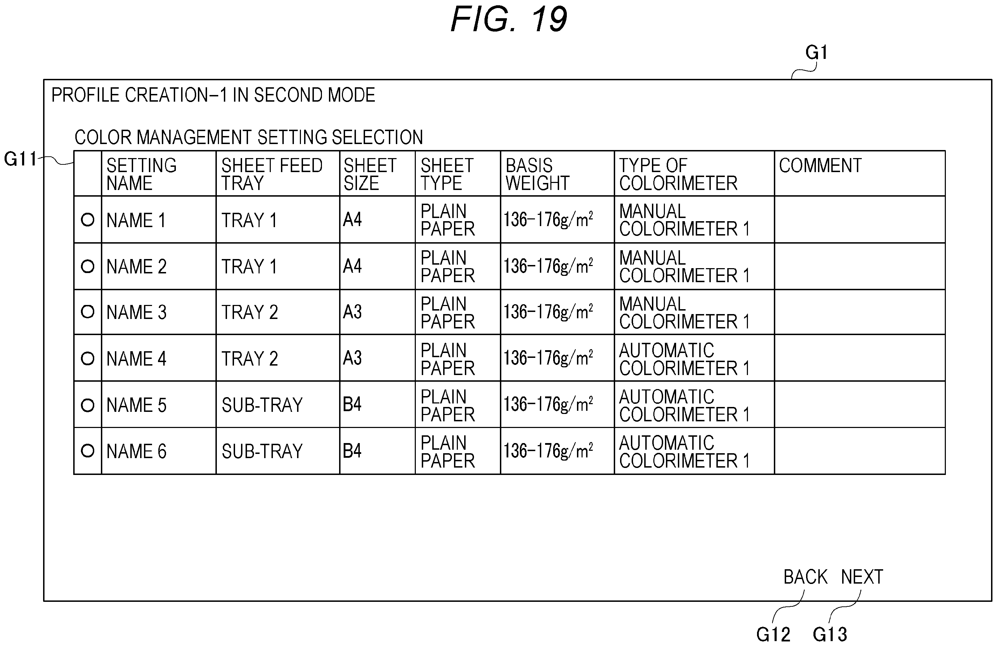

Next, a profile creation screen in the second mode of the color management system 10 according to the present embodiment will be described with reference to Figs. 19 to 22. Each of setting screens illustrated in Figs. 19 to 22 is displayed under the control of the second mode executor 312. Note that the configuration of the profile creation screen in the second mode is not limited to the configuration examples illustrated in Figs. 19 to 22 and may be appropriately changed as necessary.

Fig. 19 is a diagram illustrating an example of a configuration of a profile creation screen G1 (profile creation-1 in the second mode) in the second mode of the color management system 10 according to the present embodiment. The profile creation screen G1 has the same configuration as that of the color verification setting screen U1 in the second mode illustrated in Fig. 9, and thus redundant description thereof will be omitted.

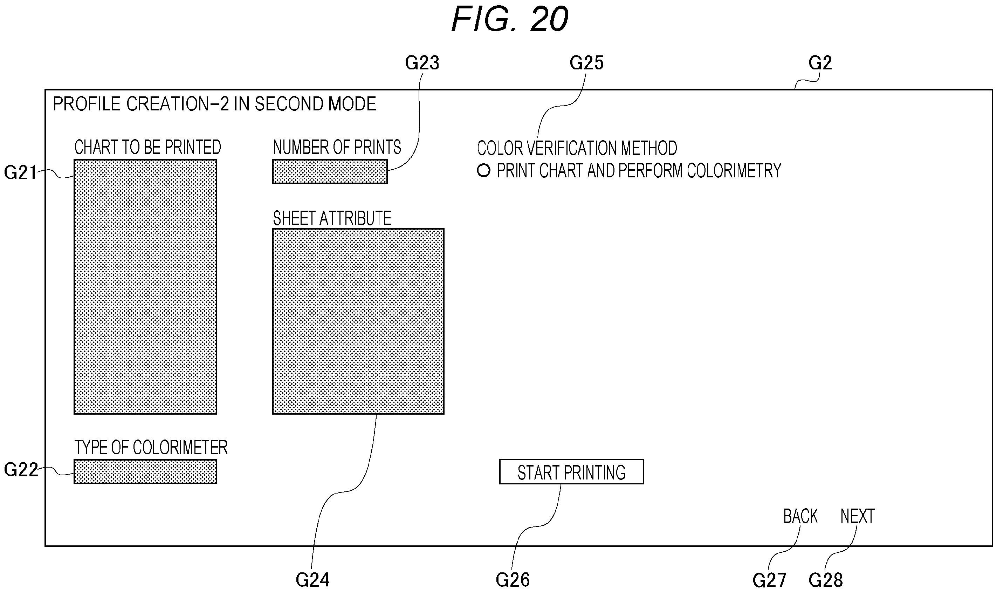

Fig. 20 is a diagram illustrating an example of a configuration of a profile creation screen G2 in the second mode of the color management system 10 according to the present embodiment. The profile creation screen G2 (profile creation-2 in the second mode) illustrated in Fig. 20 is the next screen after the profile creation screen G1 described with reference to Fig. 19. The profile creation screen G2 has the same configuration as that of the color verification setting screen U2 in the second mode illustrated in Fig. 10, and therefore, redundant description is omitted. As can be seen from comparison between the profile creation screen G2 in the second mode and the profile creation screen F4 in the first mode illustrated in Fig. 16, the profile creation screen G2 has the same configuration as that of the profile creation screen F4. However, the profile creation screen G2 has less setting items than the profile creation screen F4, that is, has less steps than the first mode.

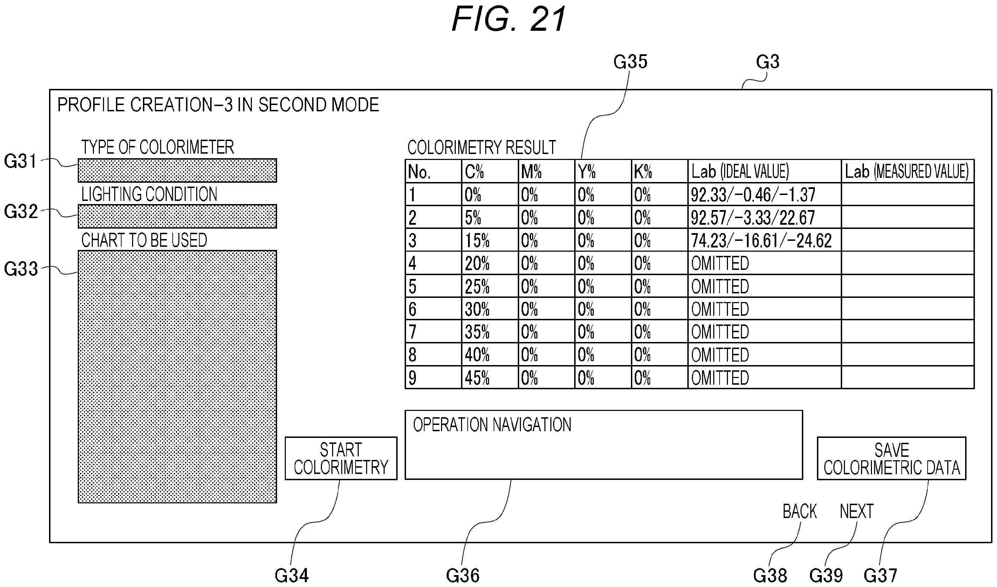

Fig. 21 is a diagram illustrating an example of a configuration of a profile creation screen G3 in the second mode of the color management system 10 according to the present embodiment. The profile creation screen G3 (profile creation-3 in the second mode) illustrated in Fig. 21 is the next screen after the profile creation screen G2 described with reference to Fig. 20. The profile creation screen G3 has the same configuration as that of the color verification setting screen U3 in the second mode illustrated in Fig. 11, and thus redundant description thereof will be omitted.

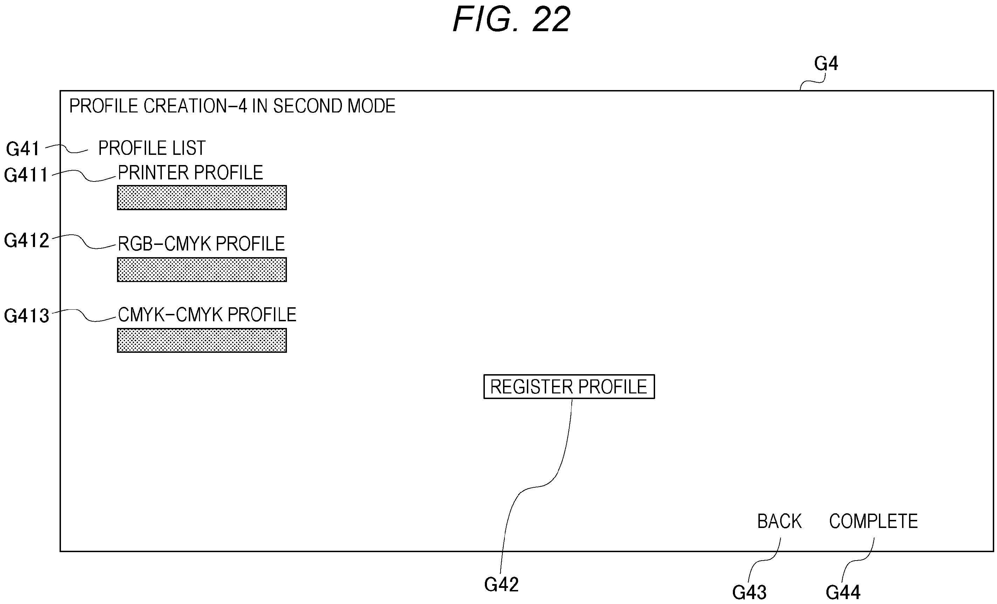

Fig. 22 is a diagram illustrating an example of a configuration of a profile creation screen G4 in the second mode of the color management system 10 according to the present embodiment. The profile creation screen G4 (profile creation-4 in the second mode) illustrated in Fig. 22 is the next screen after the profile creation screen G3 described with reference to Fig. 21. Components of the profile creation screen G4 are the same as the components of the profile creation screen F6 in the first mode illustrated in Fig. 18, except for a display part G41 for "profile list", and therefore, redundant description is omitted.

The display part G41 for "profile list" includes a display part G411 for "printer profile" created in the first mode, a display part G412 for "RGB-CMYK profile", and a display part G413 for "CMYK-CMYK profile".

The profile selected in the profile creation screen F6 in the first mode illustrated in Fig. 18 is displayed in each of the display part G411 for "printer profile", the display part G412 for "RGB-CMYK profile", and the display part G413 for "CMYK-CMYK profile". Since only the profile selected in the first mode is displayed in the display part G41 for "profile list", each combo box is in a non-selectable state (gray).

Note that the configuration of the profile creation screen G4 illustrated in Fig. 22 is a configuration in a case where various profiles can be registered in the printing apparatus 20. In a case where various profiles cannot be registered in the printing apparatus 20, a "download" button is displayed in each of the display part G412 for "RGB-CMYK profile" and the display part G413 for "CMYK-CMYK profile", similarly to the profile creation screen F6 in the first mode illustrated in Fig. 18. By pressing the "download" buttons to download each profile, the downloaded profiles can be registered in the printing apparatus 20.

### [Example of Configuration of Color Management Setting Screen]

Next, a configuration of a color management setting screen in the first mode of the color management system 10 according to the present embodiment will be described. Fig. 23 is a diagram illustrating an example of the configuration of the color management setting screen M1 in the color management system 10 according to the present embodiment.

As illustrated in Fig. 23, the color management setting screen M1 displayed by the first mode executor 311 includes the printer setting M11 and the custom target profile setting M12. The color management setting screen M1 includes a custom RGB source profile setting M13, the setting M14 for profile creation and color verification, and the color management setting M15. The color management setting screen M1 displays a dependency relationship (a connection relationship in the drawing) among the color management setting, the settings for profile creation and color verification, the setting for the printing apparatus, and a setting for a profile used in the profile creation. To be specific, the printer setting M11 (setting for the printing apparatus), the custom target profile setting M12, and the custom RGB source profile setting M13 (setting of the profile) are the lowest settings. The setting M14 for profile creation and color verification is a superordinate setting of the custom target profile setting M12 and the custom RGB source profile setting M13. The color management setting M15 is a superordinate setting of the printer setting M11 and the setting M14 for profile creation and color verification. Furthermore, when each of block buttons M11 to M15 displayed on the color management setting screen M1 is pressed, a management screen corresponding to each of the setting sections is displayed.

The identification information (names, identifications (IDs), or the like) of all the printing apparatuses 20 can be registered on the management screen for the printer setting M11. Furthermore, in the printer setting M11, an internet protocol (IP) address, an authentication setting, a communication setting, and the like of the printing apparatus 20 can be set for the printing apparatus 20 corresponding to printing from the color management system 10. Note that the configuration of the management screen for the printer setting M11 will be described later with reference to Fig. 24.

On the management screen for the custom target profile setting M12, a target profile supported by the color management system 10 by presetting and a target profile added by a user such as the color administrator P1 can be managed. Note that the target profile added by the user can be used in the setting M14 for profile creation and color verification. Note that the configuration of the management screen for the custom target profile setting M12 will be described later with reference to Fig. 24.

On the management screen for the custom RGB source profile setting M13, an RGB source profiles supported by the color management system 10 by presetting and an RGB source profile added by a user such as the color administrator P1 can be managed. The RGB source profile added by the user can be used in the setting M14 for profile creation and color verification. Note that the configuration of the management screen for the custom RGB source profile setting M13 will be described later with reference to Fig. 24.

On the management screen for the setting M14 for profile creation and color verification, the type of colorimeter to be used, a chart for the profile creation, the color verification standard, and the like can be managed. Note that a profile registered on the management screen for the setting M14 for profile creation and color verification does not depend on the printing apparatus 20. That is, the setting M14 for profile creation and color verification do not have a profile setting function that varies depending on the printing apparatus 20. Furthermore, since the color verification is performed with a chart for which a profile is applied, the setting for color verification is managed as the same setting as the setting for profile creation. Note that the configuration of the management screen for the setting M14 for profile creation and color verification will be described later with reference to Fig. 24.

On the management screen for the color management setting M15, the printer setting M11, the setting M14 for profile creation and color verification, the sheet attribute, and various settings depending on the printing apparatus 20 can be managed. When the color management setting is determined, each setting required for execution of the profile creation and the color verification is uniquely determined. The color management setting includes settings for items (for example, sheet attribute and the like) that affect a color of a printed product output by the printing apparatus and items (for example, sheet feed tray and the like) that do not affect the printed product. In addition, on the management screen for the color management setting M15, a profile name or the like to be registered for profile creation can be set differently according to the printing apparatus 20. When the color management system 10 operates in the second mode, a user such as the printing operator P2 cannot manage the color management setting.

Next, a configuration of each of the management screens for the printer setting M11, the custom target profile setting M12, the custom RGB source profile setting M13, the setting M14 for profile creation and color verification, and the color management setting M15 will be described. Fig. 24 is a diagram illustrating an example of the configuration of each of the management screens for the various settings in the color management system 10 according to the present embodiment. Since the management screens for the various settings have the same configuration, a management screen M2 is described as each of the management screens for the various settings in Fig. 24.

The management screen M2 includes a name M21 of the management screen, a setting selection section M22 displayed below the name M21, and an "add" button M23, an "edit" button M24, and a "delete" button M25 displayed on the upper right of the setting selection section M22.

In the name M21, for example, "printer setting management", "custom target profile setting management", "custom RGB source profile setting management", "profile creation and color verification setting management", and "color management setting management" are displayed as "××× management".

The setting selection section M22 includes, for each setting, a radio button, a "name" field, and a "setting item" field. The name of a setting is displayed in the "name" field. The name of each item to be set in the setting associated with the "name" is displayed in the "setting item" field. When the radio button corresponding to the "name" field is selected, the setting having the "name" is selected. Note that in addition to the name of the item, a description of the item or the like may be displayed in the "setting item" field.

When the "add" button M23 is pressed, a new setting screen (not illustrated) is displayed, and when various kinds of setting information are input and determined on the new setting screen, new settings are added to the setting selection section M22.

When the "edit" button M24 is pressed, an edit screen (not illustrated) for a setting that is in a selected state (the radio button has been selected) is displayed. On the edit screen for the setting, setting information of the setting item can be changed.

When the "delete" button M25 is pressed, the setting in the selected state (the radio button is selected) is deleted and is not displayed in the setting selection section M22.

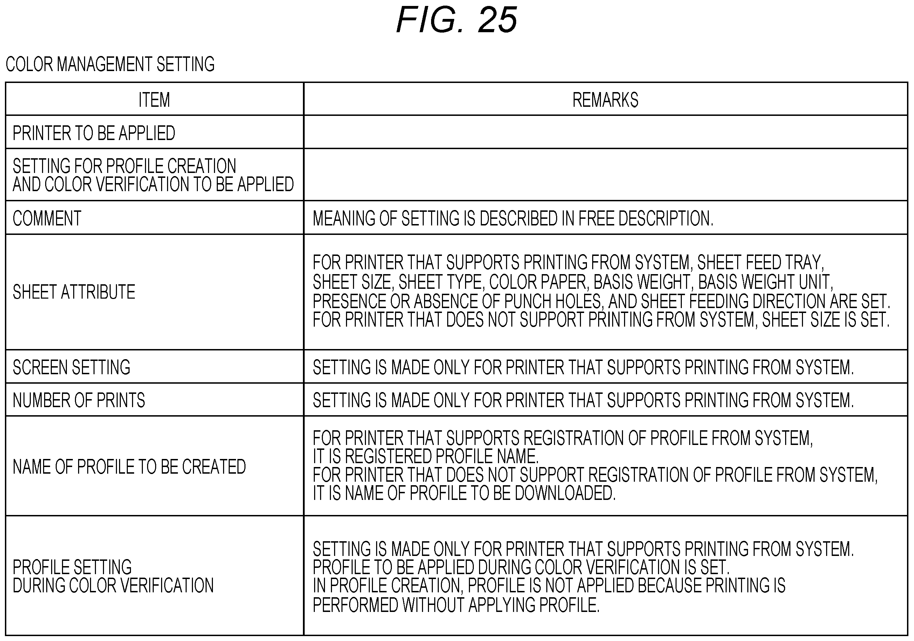

Fig. 25 is a diagram illustrating various setting items of color management setting in the color management system 10 according to the present embodiment. In a case where the management screen M2 is a management screen for color management setting, the name of the color management setting is displayed in the "name" field of the setting selection section M22 illustrated in Fig. 24. Furthermore, each item stored in an "item" field of the color management setting illustrated in Fig. 25 is displayed in the "setting item" field of the setting selection section M22 illustrated in Fig. 24. Note that the content stored in a "remarks" field illustrated in Fig. 25 may be displayed in the "setting item" field of the setting selection section M22 illustrated in Fig. 24 as an explanation of the item.

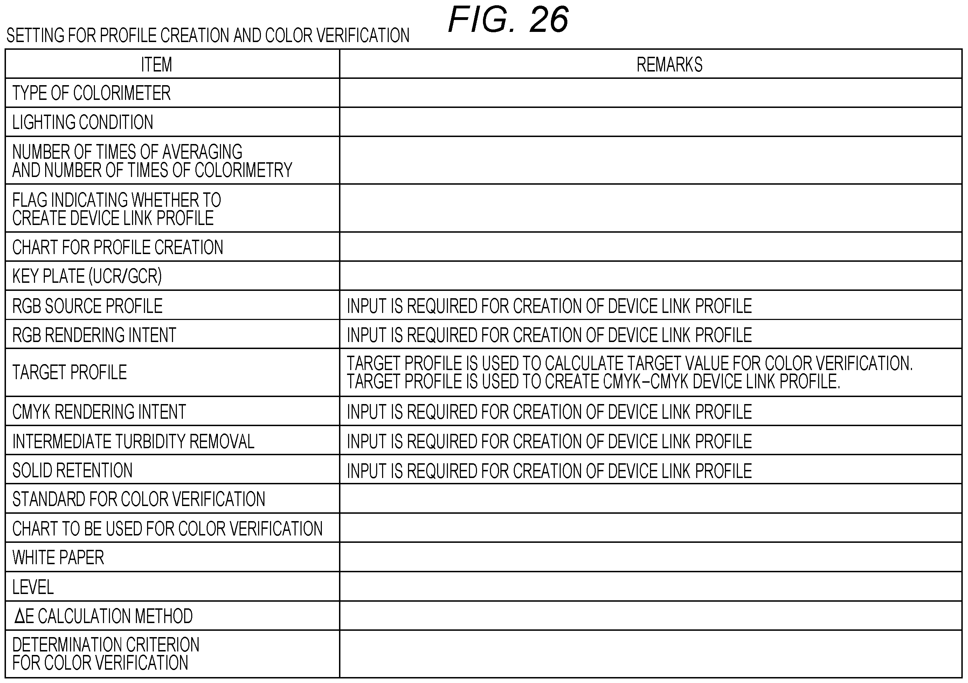

Fig. 26 is a diagram illustrating various setting items for the setting for profile creation and color verification in the color management system 10 according to the present embodiment. In a case where the management screen M2 is the management screen for the setting for profile creation and color verification, the name of the setting for profile creation and color verification is displayed in the "name" field of the setting selection section M22 illustrated in Fig. 24. In addition, each item stored in an "item" field of the setting for profile creation and color verification illustrated in Fig. 26 is displayed in the "setting item" field of the setting selection section M22 illustrated in Fig. 24. Note that the content stored in a "remarks" field illustrated in Fig. 26 may be displayed in the "setting item" field of the setting selection section M22 illustrated in Fig. 24 as an explanation of the item.

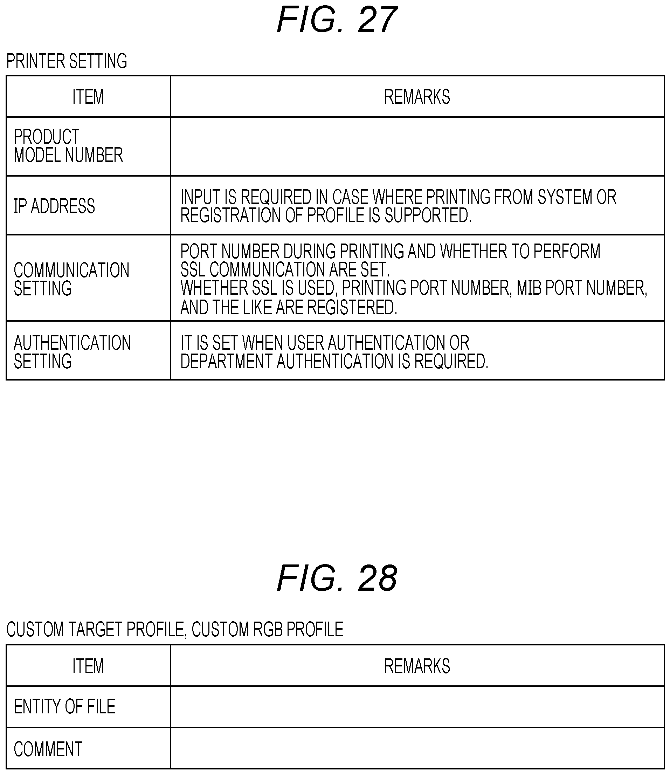

Fig. 27 is a diagram illustrating various setting items of the printer setting in the color management system 10 according to the present embodiment. In a case where the management screen M2 is a management screen for the printer setting, the name of the printer setting is displayed in the "name" field of the setting selection section M22 illustrated in Fig. 24. In addition, each item stored in an "item" field of the printer setting illustrated in Fig. 27 is displayed in the "setting item" field of the setting selection section M22 illustrated in Fig. 24. Note that the content stored in a "remarks" field illustrated in Fig. 27 may be displayed in the "setting item" field of the setting selection section M22 illustrated in Fig. 24 as an explanation of the item.

Fig. 28 is a diagram illustrating various setting items of the profile setting in the color management system 10 according to the present embodiment. In a case where the management screen M2 is the management screen for the custom target profile setting or the custom RGB source profile setting, the name of the profile setting is displayed in the "name" of the setting selection section M22 illustrated in Fig. 24. Furthermore, each item stored in an "item" field of the profile setting illustrated in Fig. 28 is displayed in the "setting item" field of the setting selection section M22 illustrated in Fig. 24.

### [Procedure of Process of Adding Color Management Setting in First Mode]

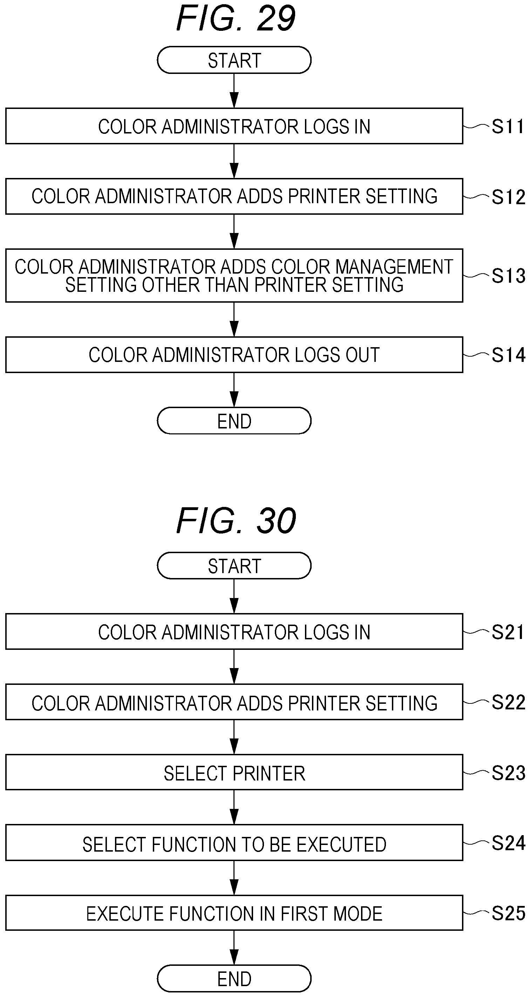

Next, a procedure of a process of adding a color management setting in the first mode in the color management system 10 will be described. Fig. 29 is a flowchart illustrating the procedure of the process of adding a color management setting in the first mode in the color management system 10 according to the present embodiment.

First, the color administrator P1 logs in to the color management system 10 (step S11).

Next, the color administrator P1 presses the "add" button M23 on the management screen (see Fig. 24 and Fig. 27) for the printer setting to add a printer setting (step S12).

Next, the color administrator P1 adds a color management setting other than the printer setting on the color management setting screen M1 (step S13). The color management setting other than the printer setting is the custom target profile setting M12, the custom RGB source profile setting M13, the setting M14 for profile creation and color verification, and the color management setting M15 illustrated in Fig. 23.

Next, the color administrator P1 logs out (step S14). After the processing of step S14, the process of adding the color management setting in the first mode ends.

### [Procedure of Function Execution Process in First Mode]

Next, a procedure of a function execution process in the first mode in the color management system 10 will be described. Fig. 30 is a flowchart illustrating the procedure of the function execution process in the first mode in the color management apparatus 30 according to the present embodiment.

First, the color administrator P1 logs in to the color management system 10 (step S21).

Next, the color administrator P1 presses the "add" button M23 on the management screen (see Fig. 24 and Fig. 27) for the printer setting to add a printer setting (step S22).

Next, the color administrator P1 selects a target printer, that is, the target printing apparatus 20 (step S23).

Next, the color administrator P1 selects a function to be executed, such as color verification, profile creation, or the like (step S24).

Next, the color administrator P1 executes the selected function in the first mode (step S25). In this process, when the execution of the first mode is started by the operation of the color administrator P1, the first mode executor 311 stores the information of the color management setting set by the color administrator P1 in the storage device 26, and executes the selected color management function in the first mode. After the processing of step S25, the function execution process in the first mode ends.

### [Procedure of Function Execution Process in Second Mode]

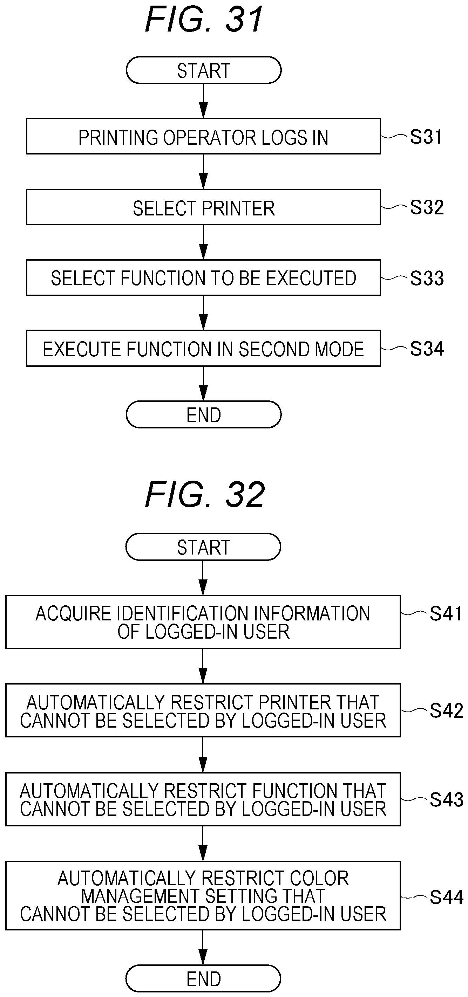

Next, a procedure of a function execution process in the second mode in the color management system 10 will be described. Fig. 31 is a flowchart illustrating the procedure of the function execution process in the second mode in the color management apparatus 30 according to the present embodiment.

First, the printing operator P2 logs in to the color management system 10 (step S31).

Next, the printing operator P2 selects a target printer, that is, a target printing apparatus 20 (step S32).

The printing operator P2 then selects a function to be executed, for example color verification, profile creation, or the like (step S33).

Next, the printing operator P2 executes the selected function in the second mode (step S34). In this process, when the execution of the second mode is started by the operation of the printing operator P2, the second mode executor 312 selects the color management setting set by the color administrator P1 from the storage device 26, and displays the selected color management setting on each setting screen in the second mode. Further, the second mode executor 312 executes the selected color management function in the second mode based on the color management setting performed on each setting screen by the printing operator P2. After the processing of step S34, the function execution process in the second mode ends.

### [Procedure of Function Restriction Process]

Next, a procedure of a function restriction process in the color management apparatus 30 will be described. A function restriction is basically a restriction on the second mode, and is automatically set based on various data (see Figs. 33A to 35 to be described later) regarding a function restriction associated with the login ID of the printing operator P2 who operates the second mode. Note that the color administrator P1 can customize the function restriction. Fig. 32 is a flowchart illustrating the procedure of the function restriction process for the second mode in the color management system 10 according to the present embodiment.

First, the second mode executor 312 of the color management apparatus 30 acquires identification information (ID) of a logged-in user (step S41). Note that logins to the color management system 10 can include a login that requires input of a user ID, a password, and the like, and a login as a public user that does not require authentication. The public user exists from the beginning of the system. For a user login requiring a user ID and a password, the color administrator P1 is required to create the user ID and the password in advance.

Next, the second mode executor 312 automatically restricts a printer (printing apparatus 20) that cannot be selected by the logged-in user, based on the later-described printer restriction data (see Figs. 33A and 33B described later) stored in the storage device 36 (step S42).

Next, the second mode executor 312 automatically restricts a function that cannot be selected by the logged-in user, based on the function restriction data (see Figs. 34A and 34B described later) stored in the storage device 36 (step S43).

Next, the second mode executor 312 automatically restricts a color management setting that cannot be selected by the logged-in user, based on the later-described color management setting restriction data (see Fig. 35 described later) stored in the storage device 36 (step S44). After the processing of step S44, the function restriction process for the second mode ends.

Next, various types of data regarding function restrictions in the color management system 10 will be described with reference to Figs. 33A to 35. Note that various types of data described below are managed for each logged-in user, and illustration and description of the data for managing the correspondence with the identification information of the logged-in user will be omitted. Furthermore, the configurations of various kinds of data described below are not limited to the configurations illustrated in the respective drawings, and can be appropriately changed as necessary.

Figs. 33A and 33B are diagrams illustrating an example of printer restriction data for the second mode in the color management system 10 according to the present embodiment. The printer restriction data includes data on a restriction on a model number of the printer and data on a restriction on a serial number of the printer. Fig. 33A illustrates the data of the restriction on the model number of the printer. Fig. 33B illustrates the data of the restriction on the serial number of the printer.

As illustrated in Fig. 33A, the data of the restriction on the model number of the printer includes a field D 11 for "restriction on model number of printer" and a field D 12 for "logged-in user". The model number of the printer, that is, the model number of the printing apparatus 20, for example, "XXXXXX" is stored in the field D11 for "restriction on model number of printer". In the field D12 for "logged-in user", information indicating whether or not the logged-in user can select the printer having the model number of the printer stored in the field D 11, for example, "0" indicating that the printer is not selectable or "1" indicating that the printer is selectable is stored.

As illustrated in Fig. 33B, the data of the restriction on the serial number of the printer has a field D21 for "restriction on serial number of printer" and a field D22 for "logged-in user".

The serial number of the printer, that is, the serial number of the printing apparatus 20, for example, "YYYYYYYY" is stored in the field D21 for "restriction on serial number of printer". Information indicating whether the logged-in user can select the printer having the serial number of the printer stored in the field D22, for example, "0" indicating that the printer is not selectable or "1" indicating that the printer is selectable, is stored in the field D21 for "logged-in user".

Figs. 34A and 34B illustrate an example of the function restriction data for the second mode in the color management system 10 according to the present embodiment. The function restriction data includes data of a restriction on a basic function and data of a restriction on a function for each specific printer. Fig. 34A illustrates data of restrictions on basic functions. Fig. 34B illustrates data of restrictions on functions for each specific printer.

As illustrated in Fig. 34A, the data of the restrictions on the basic functions includes a field D31 for "restriction on basic function" and a field D32 for "logged-in user". In the field D31 for "restriction on basic function", function names of color management, for example, "profile creation", "color verification", and the like are stored. In the field D32 for "logged-in user", information indicating whether the logged-in user can select each of the functions stored in the field D31, for example, "0" indicating that the function is not selectable or "1" indicating that the function is selectable is stored.

As illustrated in Fig. 34B, the data of the restrictions on the functions for each specific printer includes a field D41 for "restriction on function for each specific printer" and a field D42 for "logged-in user". The name of a color management function is stored for each printer (printing apparatus 20) in the field D41 for "restriction on function for each specific printer". For example, "profile creation" and "color verification" corresponding to "printer 1" and "printer 2", respectively, and the like are stored. Information indicating whether the logged-in user can select the function of the printer stored in the field D42, for example, "0" indicating that the function is not selectable or "1" indicating that the function is selectable, is stored in the field D41 for the "logged-in user". The data of the restrictions on the functions for each specific printer is not limited to the configuration illustrated in Fig. 34B, but may be, for example, data indicating whether or not the logged-in user can select each printer (printing apparatus 20) for each function.

Furthermore, the restrictions on the second mode are not limited to the various restrictions described above, and for example, a colorimeter selectable by the logged-in user can be automatically restricted based on colorimeter restriction data (not illustrated) registered in advance. Furthermore, the color management system 10 can automatically restrict the number of patches allowed for the logged-in user for the selected type of colorimeter. Fig. 35 is a diagram illustrating an example of color management setting restriction data for the second mode in the color management system 10 according to the present embodiment. As illustrated in Fig. 35, the color management setting restriction data includes a field D51 for "type of colorimeter" and a field D52 for "number of patches allowed for logged-in user".

In the field D51 for "type of colorimeter", information indicating the type of colorimeter, for example, "colorimeter 1", "colorimeter 2", or the like is stored. In the field D52 for "number of patches allowed for logged-in user", the number of patches allowed for the logged-in user in a case where a colorimeter of the type of colorimeter stored in the field D51 is used, for example, "Max" or "120" is stored. Here, "Max" is the maximum number of patches allowed by the colorimeter. When the number of patches is restricted to a number smaller than the maximum number of patches allowed by the colorimeter, a number smaller than "Max", for example, "120" illustrated in the figure is set.

### [Effects]

As described above, the color management system 10 including the color management apparatus 30 according to the present embodiment has the first mode operated by the color administrator and the second mode operated by the printing operator who lacks knowledge about colors. The color administrator makes various color-related settings in the first mode. Various color settings set by the color administrator are stored in the color management apparatus 30. In the second mode, selectable printing apparatuses 20 and selectable color management functions are automatically restricted for each printing operator who has logged in to the color management system 10, based on various data regarding the function restrictions of the color management system 10 registered in advance. Then, color management can be performed simply by selecting the printing apparatus 20 and functions selectable by the printing operator, selecting various color settings set by the color administrator in the second mode in which at least one of the steps is simplified, and performing simple color setting. Therefore, with the color management system 10 including the color management apparatus 30 according to the present embodiment, even the printing operator who lacks knowledge about colors can easily perform color management for the printing apparatus.

Note that the present invention is not limited to the above-described embodiments, and various other application examples and modification examples can be adopted without departing from the spirit and scope of the present invention described in the claims.

For example, in the above-described embodiments, the configurations of the color management apparatus and the color management system have been described in detail and specifically in order to explain the present invention in an easy-to-understand manner, and the present invention is not necessarily limited to those including all the configurations described above. Furthermore, a part of the configuration according to the embodiment described here can be replaced with the configuration according to another embodiment, and furthermore, the configuration according to another embodiment can be added to the configuration according to an embodiment. Furthermore, another configuration can be added to, deleted from, or replaced with a part of the configuration according to the embodiment.

In addition, control lines and information lines that are considered to be necessary for description are illustrated, and all of control lines and information lines on a product are not necessarily illustrated. Actually, it may be considered that almost all of the components are connected to each other.

In addition to the functions described in the above embodiment, for example, the second mode executor 312 of the color management apparatus 30 may have a function of confirming whether the color management function has been executed in accordance with a predetermined schedule. With this function, when the color management function is executed in accordance with a predetermined schedule, the second mode executor 312 notifies the completion of the execution of the color management function in accordance with a notification method (for example, e-mail) set in the first mode. When the color management function is not executed in accordance with the predetermined schedule, the second mode executor 312 notifies that the color management function has not been executed in accordance with the notification method set in the first mode. Note that the settings of the notification method, the determined schedule, and the like can be set by the color administrator P1 in the first mode.

Further, the second mode executor 312 of the color management apparatus 30 may have a support function for managing colors. For example, the second mode executor 312 may change the background color of each activated setting screen to a different color according to a shortcut for activating the color management function, the setting of the printing apparatus 20, the color management setting, or the like. The use of this support function can prevent an error in selection of a shortcut for the printer setting, the color management setting, or the like. Note that the support function is not limited to the above function, and other support functions may be provided.

When an error occurs during the execution of the color management function, the second mode executor 312 of the color management apparatus 30 may notify the details of the error in accordance with the notification method set in the first mode.

Although embodiments of the present invention have been described and illustrated in detail, the disclosed embodiments are made for purposes of illustration and example only and not limitation. The scope of the present invention should be interpreted by terms of the appended claims.

### [List of Reference Signs]

10 color management system, 20 printing apparatus, 30 color management apparatus, 311 first mode executor, 312 second mode executor

## Claims

1. A color management apparatus (30) comprising a first mode executor (311) and a second mode executor (312), wherein
the first mode executor (311) executes a first mode to perform color management setting including setting of a plurality of items regarding a color management function of a printing apparatus (20) through a plurality of steps, and perform the color management function, and
the second mode executor (312) executes a second mode to simplify at least one step among the plurality of steps to perform the color management setting, and perform the color management function.

2. The color management apparatus according to claim 1, wherein the second mode executor (312) selects the color management setting performed by the first mode executor (311), changes one or more of the plurality of items included in the selected color management setting, and performs the color management function.

3. The color management apparatus according to claim 2, wherein the color management function includes a plurality of color management functions which are two or more of color verification, profile creation, calibration, maximum density adjustment, and density balance adjustment.

4. The color management apparatus according to claim 2, wherein
a plurality of printing apparatuses (20) including the printing apparatus are present,
the first mode executor (311) can perform the color management setting for each of a plurality of color management functions including the color management function and the color management setting for each of the printing apparatuses, and
the second mode executor (312) automatically sets a selectable printing apparatus (20) among the plurality of printing apparatuses (20) based on printer restriction data registered in advance and automatically sets a selectable color management function among the plurality of color management functions based on function restriction data registered in advance.

5. The color management apparatus according to claim 4, wherein the second mode executor (312) automatically sets a selectable color management function among the plurality of color management functions for each of the printing apparatuses (20) based on the function restriction data and automatically sets a selectable printing apparatus (20) among the plurality of printing apparatuses (20) for each of the color management functions.

6. The color management apparatus according to claim 4, wherein the second mode executor (312) can automatically set, based on the printer restriction data, a selectable color management function among the plurality of color management functions for each of model numbers of the printing apparatuses (20), and can automatically set a selectable color management function among the plurality of color management functions for each of serial numbers of the printing apparatuses (20).

7. The color management apparatus according to claim 4, wherein the second mode executor (312) automatically sets, based on colorimeter restriction data registered in advance, a selectable colorimeter that performs colorimetry on a printed product output by each of the printing apparatuses (20).

8. The color management apparatus according to claim 7, wherein the second mode executor (312) automatically sets, for each type of the colorimeter, a selectable colorimetry chart and the number of patches in the colorimetry chart, based on color management setting restriction data registered in advance.

9. The color management apparatus according to claim 4, wherein
the color management functions include color verification and profile creation, and
the first mode executor (311) displays a dependency relationship among the color management setting, a setting for the profile creation and the color verification, a setting for the printing apparatus, and a setting for a profile to be used in the profile creation.

10. The color management apparatus according to claim 1, wherein
the first mode can be switched to the second mode by a predetermined operation, and/or
the second mode can be switched to the first mode by a predetermined operation when the switching is permitted by the first mode.

11. The color management apparatus according to claim 1, wherein
when the second mode is switched to the first mode, the second mode executor (312) notifies the switching of the mode in accordance with a notification method set in the first mode, and/or
when an error occurs during execution of the color management function, the second mode executor (312) notifies a detail of the error in accordance with a notification method set in the first mode.

12. The color management apparatus according to claim 1, wherein
the second mode executor (312) notifies completion of execution of the color management function in accordance with a notification method set in the first mode when the color management function is executed in accordance with a predetermined schedule, and notifies non-execution of the color management function in accordance with the notification method when the color management function is not executed in accordance with the schedule.

13. The color management apparatus according to claim 1, wherein the second mode executor (312) changes a background color of each activated setting screen to a different color in accordance with a shortcut for activating each of the color management function, the setting for the printing apparatus (20), and the color management setting.

14. A color management system comprising:
a printing apparatus (20) that forms an image on at least one recording medium;
a first mode executor (311); and
a second mode executor (312), wherein
the first mode executor (311) executes a first mode to perform color management setting including setting of a plurality of items regarding a color management function of the printing apparatus (20) through a plurality of steps, and perform the color management function, and
the second mode executor (312) executes a second mode to simplify at least one step among the plurality of steps to perform the color management setting, and perform the color management function.

15. A color management program for causing a computer to execute:
a first mode to perform color management setting including setting of a plurality of items regarding a color management function of a printing apparatus (20) through a plurality of steps, and perform the color management function; and
a second mode to simplify at least one step among the plurality of steps to perform the color management setting, and perform the color management function.
